Europäisches Patentamt

European Patent Office

Office européen des brevets

(11) Veröffentlichungsnummer: **0 212 052 B1**

# (12) EUROPÄISCHE PATENTSCHRIFT

(45) Veröffentlichungstag der Patentschrift: **21.10.92**

(21) Anmeldenummer: **86104028.5**

(22) Anmeldetag: **24.03.86**

(51) Int. Cl.⁵: **G01B 11/08**, G01B 11/24

(54) Einrichtung zur Vermessung von im Fahrzeug eingebauten Rädern von Radsätzen.

(30) Priorität: **12.08.85 DE 3528875**

(43) Veröffentlichungstag der Anmeldung:
**04.03.87 Patentblatt 87/10**

(45) Bekanntmachung des Hinweises auf die
Patenterteilung:
**21.10.92 Patentblatt 92/43**

(84) Benannte Vertragsstaaten:
**DE FR GB IT**

(56) Entgegenhaltungen:
**EP-A- 007 227          DE-A- 1 815 689
DE-A- 2 513 389      DE-A- 2 557 498
DE-A- 3 432 355      DE-A- 3 432 361
DE-B- 1 170 661       DE-B- 1 219 244
DE-B- 1 223 164       US-A- 4 155 526**

(73) Patentinhaber: **Wilhelm Hegenscheidt Gesellschaft mbH
Neusser Strasse 3
W-5140 Erkelenz(DE)**

(72) Erfinder: **Wittkopp, Helmut, Dipl.-Ing.
Cusanushof 87
W-5140 Erkelenz(DE)**
Erfinder: **Coenen, Wilfred, Dr.-Ing.
Beckrather Dorfstrasse 93
W-4050 Mönchengladbach 4(DE)**
Erfinder: **Gruteser, Helmut
Oberer Weg 36
W-5143 Wassenberg-Birgelen(DE)**
Erfinder: **Elschenbroich, Walter
Hinter den Hecken 60
W-5140 Erkelenz(DE)**

(74) Vertreter: **Liermann, Manfred
Schillingsstrasse 335
W-5160 Düren(DE)**

## Beschreibung

Die Erfindung betrifft eine Einrichtung zur Vermessung von im Fahrzeug eingebauten Rädern von Radsätzen von Schienenfahrzeugen.

Einrichtungen der oben beschriebenen Art sind bspw. bekannt geworden durch die DE-OS 18 15 689. Bei solchen Einrichtungen muß der eingebaute Radsatz angehalten und in einer Unterflurmeßeinrichtung positioniert, aufgenommen und angetrieben werden. Dann kann die Vermessung durchgeführt und nachfolgend der Radsatz wieder aus der Einrichtung gelöst und auf das Gleis gesetzt werden.

Mit der US-A-4 155 526 ist eine Einrichtung zur Ermittlung von Durchmessern an Rädern von Eisenbahnradsätzen bekannt geworden, mit der eingebaute Räder von Eisenbahnradsätzen während der Fahrt auf der Schiene vermessen werden können. Ausreichende Daten für eine korrekte Reprofilierung eines verschlissenen Profils können jedoch nicht erlangt werden.

Weiter ist mit der EP-A-007 227 eine Einrichtung bekannt geworden, mit der Teile des Profils einer Eisenbahnschiene während einer Relativbewegung zwischen Einrichtung und Schiene vermessen werden können. Zwar ist in dieser Schrift auch ausgesagt, daß die Einrichtung auch angewandt werden kann bei Profilen von Rädern von Eisenbahnradsätzen. Das Profil von Eisenbahnrädern ist jedoch nicht langgestreckt sondern kreisförmig gebogen, so daß nicht zu erkennen ist, wie diese Einrichtung bei Eisenbahnrädern zu verwertbaren Meßergebnissen kommen kann. Nähere Angaben hierzu sind dieser Schrift nicht zu entnehmen.

Weiter ist mit der nicht vorveröffentlichten DE-A-34 32 361 eine Anordnung zur Bestimmung des Raddurchmessers der Räder von Eisenbahnradsätzen bekannt geworden, bei der der Radsatz eingebaut und während der Messung sich entlang der Schiene bewegen kann.

Der Erfindung liegt die Aufgabe zugrunde, eine Einrichtung der eingangs beschriebenen Art vorzuschlagen, mit der im Fahrzeug eingebaute Radsätze ohne Fahrtunterbrechung und automatisierbar mindestens hinsichtlich ihres Durchmessers und ihres Profilzustandes vermessen werden können, wobei die Einrichtung aber ebenso auch einzelne, ausgebaute Radsätze vermessen können.

Diese Aufgabe ist bei einer Einrichtung der eingangs beschriebenen Art durch die Merkmale der Ansprüche 1 oder 2 gelöst.

Bei einer solchen Einrichtung kann ein vollständiger Zug, wenn auch mit verlangsamter Fahrt, den Meßbereich passieren und es werden dabei je nach Bedarf einzelne oder alle Radsätze hinsichtlich ihres Durchmessers an der Durchmessererfassungseinrichtung und hinsichtlich ihres Profilzustandes an der Profilerfassungseinrichtung überprüft, wobei die von den beiden Einrichtungen erfaßten Werte einer zugeordneten Auswerteeinrichtung zugeführt werden, die dann die gewünschten Angaben beispielsweise auf einer Anzeigeeinrichtung oder einem Bildschirm anzeigt oder ausdruckt oder die ermittelten Daten beispielsweise an die Steuerung einer Unterflurreprofilierungsmaschine weitergibt, die im selben Gleis angeordnet sein kann und die den als schadhaft ermittelten Radsatz übernimmt und an diesem Radsatz eine notwendige Aufarbeitung durchführt. In gleicher Weise kann auch ein ausgebauter einzelner Radsatz vermessen werden. Für die Funktion der Anlage ist es ohne Bedeutung, ob ein- oder ausgebaute Radsätze vermessen werden.

Während jeder einzelne Radsatz eines solchen Zuges oder eines Wagens die Meßstrecke durchläuft, wird bei der Variante gemäß Anspruch 1 im Bereich von als Schiene ausgebildeten Stützmitteln in vorher festgelegter Meßpositionn das Profil jedes Rades des Radsatzes radial so beleuchtet, daß ein bekannter Lichtschnitt oder eine bekannte Lichtkante entsteht. In bekannter Relation zu dieser Lichtkante oder dem Lichtschnitt ist mindestens eine Kamera zur Aufnahme des sich ergebenden Profilbildes angeordnet. In der Meßposition kann Kamera und Beleuchtungseinrichtung synchronisiert sein, so daß die Beleuchtungseinrichtung die Beleuchtung in Form eines Lichtblitzes vornimmt und gleichzeitig die Kamera in der richtigen Zeitfolge das entstehende Bild aufnimmt. Es ist aber auch denkbar, eine Dauerbeleuchtung vorzusehen und nur die Kamera in der richtigen Meßposition des Rades für den notwendigen kurzen Zeitraum für die Aufnahme zu aktivieren. Die Mittel zur Erfassung der Meßposition können die gewünschte Schaltung auslösen. Über die Verbindung der Kamera oder der Kameras mit einer Auswerteeinrichtung werden die Werte der Kamera digitalisiert, mit einem im Rechner oder in der Auswerteeinrichtung gespeicherten Sollprofil verglichen und es wird die Differenz zum Sollprofil festgestellt. Eine Ausgabeeinheit gibt dann einen "gut-Befund" oder bei Bedarf Zahlenwerte oder Werte für eine Dokumentation oder für eine Weiterverarbeitung in einer weiteren Maschinensteuerung. Gleichzeitig oder einzeln kann das Ergebnis auch in Form einer Kurve ausgeschrieben oer auf einem Bildschirm angezeigt werden.

Vorteilhafte Ausgestaltungen der Erfindung ergeben sich aus den abhängigen Ansprüchen 3 bis 55.

Die Erfindung soll nun anhand von Zeichnungen, die Ausführungsbeispiele zeigen, näher erläutert werden.

Es zeigen:

Figur A:      Aufbauschema der Anlage in Seitenansicht

Figur B:      Ansicht in Richtung des Pfeils I nach Figur A

Figur 1:      Schematische Darstellung einer Durchmessermeßstrecke in Seitenansicht

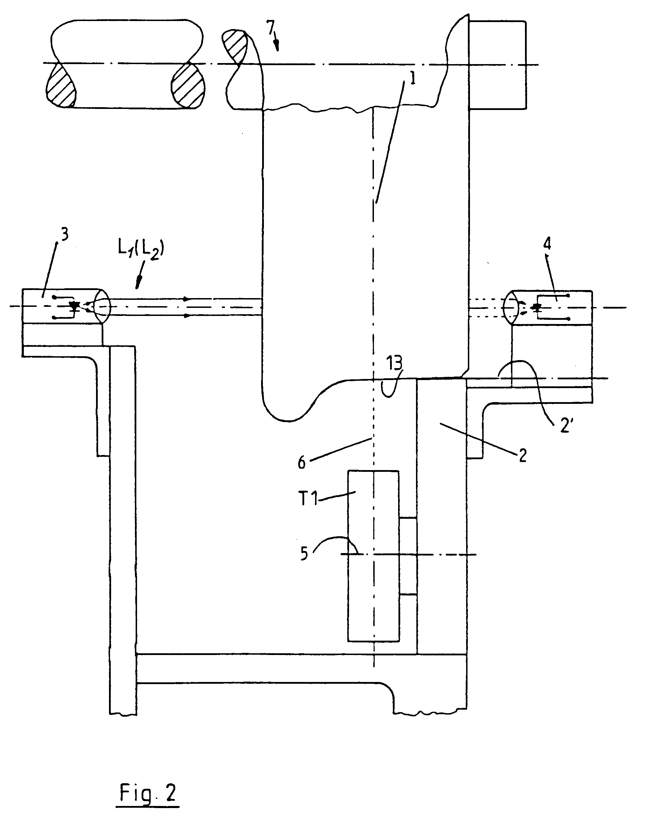

Figur 2:      Ansicht in Richtung des Pfeils A in Figur 1

Figur 3:      Ansicht ähnlich wie Figur 1, mit zurückgerechneten Punkten des zu ermitelnden Kreisdurchmessers

Figur 4:      Skizze zur Erläuterung des Kalibrirvorganges

Figur 5:      Ansicht in Richtung des Pfeils A in Figur 9 oder in Richtung des Pfeils B in Figur 8

Figur 6:      Schema der Abtastung

Figur 7:      Schema nach Figur 6, jedoch mit erweiterter Abtastung

Figur 8:      Prinzipskizze zur Zeiterfassung

Figur 9:      Schematischer Aufbau einer Durchmessererfassungseinrichtung

Figur 10:      Schematischer Aufbau einer Profilerfassungseinrichtung in Seitenansicht

Figur 11:      Ansicht in Richtung des Pfeils B in Figur 10

Figur 12:      Variante zu Figur 10

Figur 13:      Ansicht in Richtung des Pfeils A in Figur 12

Figur 14:      Schematischer Aufbau einer anderen Profilerfassungseinrichtung in Seitenansicht

Figur 15:      Alternative Anordnung zu Figur 14

Figur 16:      Ansicht in Richtung des Pfeils A in Figur 14

Figur 17:      Variante zu Figur 1 mit sich zentrierender Einrichtung

Figur 18:      Schematischer Aufbau einer Rechneranlage mit Kameras für beide Räder eines Radsatzes, einen Kamerainterface zum Zentralrechner, den Massenspeicher und als Ausgabeeinheit ein Terminal

Figur 19:      Zeichnerische Darstellung der Datenauswertung im Rechner

Die Figuren A und B zeigen den schematischen Aufbau der Gesamtanlage mid dem Meßbereich X, wobei innerhalb dieses Meßbereiches die Baugruppen U, V und W angeordnet sind. Hierbei ist U eine Durchmessererfassungseinrichtung, V eine Reinigungseinrichtung und W eine Profilerfassungseinrichtung. Der Radsatz, von dem nur ein Rad 1 bzw. 18 angedeutet ist, durchläuft den Meßbereich X in Richtung des Pfeils y. Hierbei wird er von der Reinigungseinrichtung V an seiner Umfangsfläche gereinigt. Die Reinigungseinrichtung V wird hierzu ein genügend langes Stück mit dem Rad 1, 18 mitgeführt. In aller Regel kann sich die Reinigung auf den Bereich des Spurkranzes und den Übergangsbereich zwischen Spurkranz und Lauffläche beschränken. Es genügt daher, eine mitgeführte Sandstrahl- oder Partikelstrahleinrichtung, die im geschlossenen Kreislauf arbeitet. Aber auch der Einsatz von Bürsten ist ausreichend und geeignet.

Nachfolgend soll nun eine Ausführung einer Durchmessererfassungseinrichtung U beschrieben werden.

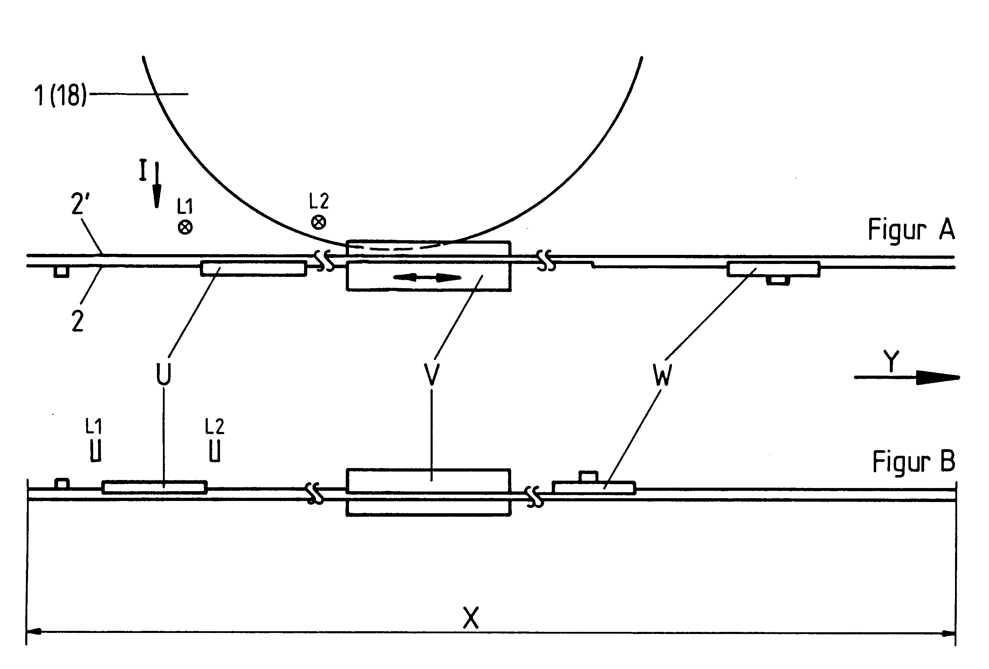

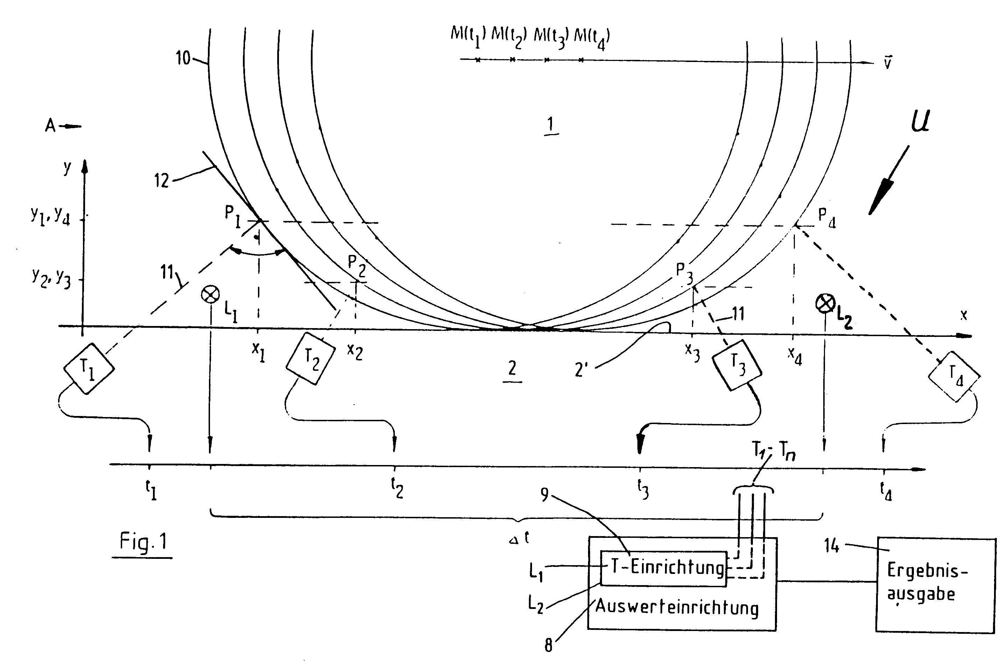

Nach Figur 1 durchläuft ein Rad 1 eines Radsatzes 7 eine Meßstrecke, die von den Lichtschranken L 1 und L 2 begrenzt ist. Diese Lichtschranken bestehen jeweils aus einem Lichtsender 3 und einem entsprechenden Empfänger 4. Jedes Rad 1 eines Radsatzes 7 rollt hierbei auf einer Schiene 2, deren Oberkante die Laufebene 2' bildet.

In der Meßstrecke sind unterhalb der Laufebene 2' berührungslos arbeitende fotoelektrische Taster T1 bis T4 angeordnet. Es kann sich hierbei um fotoelektrische Taster zum Erkennen eines Objektes in fest eingestellter Entfernung handeln, so wie sie im Handel erhältlich sind. Solche Einrichtungen senden beispielsweise Infrarotlicht in einem Winkel zu einem Einfallslot aus, so daß dieses Einfallslot an einer bestimmten Stelle geschnitten wird von dem ausgesandten Licht. Dieser Schnittpunkt ist bei solchen Geräten häufig einstellbar. Tritt nun ein reflektierendes Objekt in den Schnittpunkt ein, so wird das ausgesandte Licht von der Oberfläche, die sich in diesem Schnittpunkt befindet, reflektiert, um dann in dem fotoelektrischen Taster von einem entsprechenden Empfänger registriert zu werden. Ein Objekt wird nur dann erkannt, wenn es im den Tastpunkt darstellenden Schnittpunkt der optischen Achse des Lichtsenders und der des Empfängers liegt. Hierbei sorgt die Konstruktion des Empfängers dafür, daß Licht mit bestimmter Intensität und aus bestimmter Richtung kommend eine elektrische Schaltung auslöst, so daß diese elektrische Schaltung das Signal dafür ist, daß sich im vorbestimmten und damit bekannten Tastpunkt die Oberfläche eines Objektes befindet.

Der Durchmesser eines Rades 1 eines Radsatzes 7 wird in einer am Rad 1 eines Radsatzes 7 definierten und lateral festgelegten Meßebene bestimmt. Die fotoelektrischen Taster T1 bis T4 sind daher unterhalb der Laufebene 2' in solcher seitlichen Anordnung befestigt, daß die Haupttastrichtung 11 mindestens angenähert innerhalb dieser Meßebene 6 liegt. Diese Meßebene 6 schneidet demzufolge ein Rad 1, so daß die äußere Begrenzung dieser Schnittfläche in der Meßebene 6 den Meßkreis 10 bildet.

Die fotoelektrischen Taster T1 bis T4 sind in ihrer Anordnung unterhalb der Laufebene 2' so ausgerich-

EP 0 212 052 B1

tet, daß ihre Haupttastrichtung 11 wenigstens angenähert senkrecht zu einer Tangente 12 an den Meßkreis 10 im jeweiligen Tastpunkt P 1 bis P 4 verläuft. Auf diese Art und Weise kann auch in gewissen Grenzen ein Druchmesserunterschied von Rad zu Rad hingenommen werden, ohne daß hierdurch das Meßergebnis unzulässig beeinträchtigt würde.

Um die Taster T1 bis T4 auszurichten oder die ganze Meßanlage auf Räder eines anderen Durchmesserbereiches auszurichten, können die Taster T1 bis T4 um eine Achse 5 schwenkbar und feststellbar angeordnet sein. Durch eine Schwenkbewegung um die Achse 5 wird die Winkellage der Haupttastrichtung 11 verändert, so daß auch die Lage des jeweiligen Tastpunktes P 1 bis P4 entsprechend verändert wird.

Die Lichtschranken L1 und L2 sowie die Taster T1 bis T4 sind mit einer Zeiterfassungseinrichtung 9 verbunden, welche die jeweiligen Zeiten, zu denen die Lichtschranken L1 und L2 und die Taster T1 bis T4 betätigt werden, feststellt. Diese Zeiten werden zwischengespeichert und von einer Auswerteinrichtung 8 für die nachfolgende Geschwindigkeitsbestimmung und Durchmesserbestimmung weiter verwertet.

Ist die Meßanlage ausgerichtet, kann ein Meßvorgang wie nachfolgend beschrieben ablaufen.

Bei der Beschreibung der Messung wird nur ein Rad 1 eines Radsatzes 7 betrachtet.

Das Rad 1 läuft mit einem Bereich Seiner Lauffläche 13 auf einer Schiene 2, deren Oberkante, wie bereits beschrieben, eine Laufebene 2' bildet. Hierbei bewegt sich dieses Rad 1 in Richtung des Pfeiles A nach Figur 1 auf die Lichtschranke L1 zu und es wird von der Vorderseite des Rades 1 die Lichtschranke L1 betätigt. Mit der Betätigung der Lichtschranke L1 kann eine Zeiterfassungseinrichtung eingeschaltet werden oder es wird bei einer durchlaufenden Zeiterfassungseinrichtung der Schaltpunkt der Lichtschranke L1 zeitlich erfaßt. Der so festgelegte Zeitpunkt wird abgespeichert. Nach Durchlaufen der Meßstrecke wird von der gleichen Vorderseite des Rades 1 die Lichtschranke L2 betätigt und es wird auch der Zeitpunkt der Betätigung der Lichtschranke L2 abgespeichert und es kann nun durch einen Rechenvorgang, beispielsweise in einer Auswerteinrichtung 8, errechnet werden, wieviel Zeit das Rad 1 benötigt hat, um von der Lichtschranke L1 bis zur Lichtschranke L2 zu rollen. Der Abstand zwischen diesen beiden Lichtschranken ist bekannt und es kann mit diesem bekannten Abstand und der errechneten Zeit, die das Rad 1 gebraucht hat, um diesen Abstand zurückzulegen, dessen Geschwindigkeit errechnet werden.

Während sich das Rad 1 in Richtung des Pfeiles A auf der Laufebene 2' entlang der Schiene 2 bewegt, kommt die nach Figur 1 linke Seite der Lauffläche 13 des Rades 1 in den Bereich des Tastpunktes P1 und löst bei dessen Erreichen über den fotoelektrischen Taster T1 wieder ein Zeitsignal, das Zeitsignal t1 aus.

In Figur 1 ist auf der linken Seite auf der als Abszisse dargestellten Laufebene 2' eine Ordinate aufgetragen. Der Tastpunkt P1, ebenso wie die weiteren Tastpunkte P2, P3 und P4, liegen, da die fotoelektrischen Taster T1 bis T4 in der Meßanlage fest montiert sind, nach ihren X- und Y-Koordinaten fest. Wird also der Punkt P1 von der Lauffläche 13 des Rades 1 passiert und löst damit ein Schaltsignal am fotoelektrischen Taster T1 aus, so ist damit bekannt, daß ein Punkt der Lauffläche 13, der in der Höhe Y1 liegt, den Punkt X1 passiert hat. Es liegt, wie eben beschrieben, auch der Zeitpunkt fest, in dem dies geschehen ist.

Bewegt sich nun nach Figur 1 das Rad 1 weiter in Richtung des Pfeils A, so wird auch ein in der Höhe Y2 liegender Tastpunkt P2 des fotoelektrischen Tasters T2 im Punkt X2 passiert. Es wird dann ebenfalls vom fotoelektrischen Taster T2 ein Zeitsignal t2 gesetzt.

Auf der anderen Seite einer nicht näher dargestellten und senkrecht zur Zeichenebene verlaufenden Mittenebene (Figur 1) sind fotoelektrische Taster T3 und T4 in der für den Taster T1 bereits beschriebenen Weise angeordnet. Diese Taster T3 und T4 weisen jedoch zu der beschriebenen Ebene den zu den Tastern T1 und T2 umgekehrten Winkel in ihrer Haupttastrichtung auf. Sie leuchten damit sozusagen dem ankommenden Rad 1 entgegen. Das ankommende Rad 1 durchläuft mit seiner Lauffläche 13 in der Meßebene nun den Punkt P3 als Tastpunkt des fotoelektrischen Tasters T3, der in der Höhe Y3 (im Ausführungsbeispiel identisch mit Y2) liegt und auf der Abszisse den Wert X3 aufweist. Hierdurch wird vom fotoelektrischen Taster T3 ein Zeitsignal t3 gesetzt.

Gleiches geschieht mit dem Punkt P4 des fotoelektrischen Tasters T4, dem auf der Abszisse der Wert X4 zugeordnet ist. Bei Erreichen des Tastpunktes P4 wird vom fotoelektrischen Taster T4 ebenfalls wieder ein Zeitsignal t4 gesetzt. Der Ordinatenwert Y4 des Tastpunktes P4 stimmt im Ausführungsbeispiel wiederum überein mit dem Ordinatenwert Y1 des Tastpunktes P1.

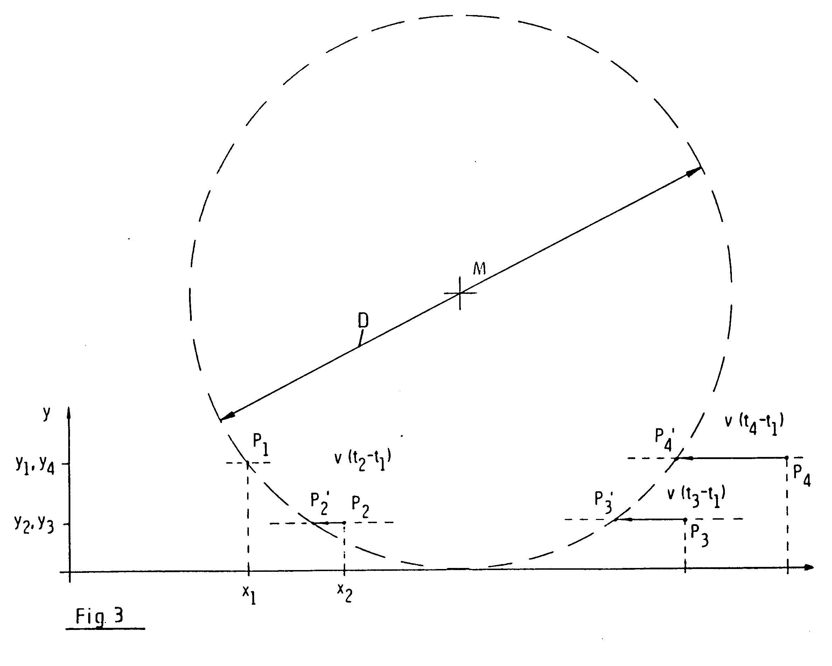

Zur Bestimmung eines Kreises genügen drei Punkte, aus denen der Durchmesser des Kreises, so die Lage dieser Punkte bekannt ist, ermittelt werden kann. Im Ausführungsbeispiel würden also beispielsweise die Punkte P1, P4 und als Referenzpunkt der Aufstandpunkt des Rades auf der Laufebene 2' der ja aufgrund des bekannten Radprofils in die Meßebene 6 zurückverlegt werden kann, ausreichen, un den Durchmesser D des Meßkreises 10 zu ermitteln. Betrachtet man jedoch die Punkte P1 und P4 in Figur 1, so stellt man fest, daß diese beiden Punkte nicht auf dem gewünschten Meßkreis 10 liegen, sondern aufgrund der Bewegung des Rades 1 eine andere Position einnehmen, die jedoch bekannt ist. Da aber die Bewegungsgeschwindigkeit des Rades 1 bekannt ist, ist es möglich, die jeweiligen Tastpunkte so zurückzurechnen, daß bei unveränderter Ordinatenposition ihre Abszissenwerte so verschoben werden, als hätte sich das Rad nicht bewegt. Dieses Prinzip wird verdeutlicht in Figur 3. Es ist hierbei der Tastpunkt P1 mit seinen zugeordneten Koordinate Y1 und X1 fixiert worden. Sodann kann über die Auswerteinrichtung 8 festgestellt werden, welche Zeit vergangen ist, bis das Rad 1 mit seiner Lauffläche 13 nach der Schaltauslösung im Punkt P1 die Schaltung im Punkt P2 bewirkt hat. Da über die Zeitmessung zwischen den Lichtschranken L1 und L2 die Geschwindigkeit des Rades von der Auswerteinrichtung ermittelt werden kann, ist es nun möglich die solcherart ermittelte Geschwindigkeit des Rades mit der Zeit, die zwischen dem Schaltvorgang P1 und P2 verstrichen ist, zu multiplizieren und den Punkt P2 auf der Abzsisse um den so errechneten Weg zurückzuverlegen, so daß der Punkt X2 sich in Richtung des Punktes X1 um den entsprechenden Betrag verschiebt und damit einen auf dem tatsächlichen Meßkreis 10 liegenden Punkt P2' im Rechner erzeugt. Gleiches geschieht mit den Tastpunkten P3 und P4 und es werden hierdurch im Rechner die entsprechenden Punkte P3' und P4' erzeugt. Auf diese Art und Weise stehen nun im Rechner, abgesehen vom Aufstandpunkt des Rades 1 auf der Laufebene 2', vier Punkte, die Punkte P1, P2', P3' P4' zur Verfügung, deren Xund Y-Koordinaten bekannt sind. Es ist nun möglich sich von diesen Punkten z. B. drei Punkte auszusuchen und über die Auswerteinrichtung und den darin enthaltenen Rechner den zugehörigen Durchmesser D des Kreises 10 direkt zu errechnen oder auch alle zur Verfügung stehenden Punkte zu verwenden (wodurch der Kreis überbestimmt ist) und den zugehörigen Durchmesser D des Meßkreises 10 mit Hilfe des Newton-Kantorowitsch-Verfahrens zu bestimmen. Das Ergebnis kann dann in einer Ausgabeeinrichtung I4 in gewünschter Weise ausgegeben werden. Diese Ausgabeeinrichtung 14 ihrerseits kann natürlich mit weiteren Einrichtungen verbunden sein.

Es ist auch durchaus möglich, einen anderen Punkt als Punkt P1 bei Errechnung der Verschiebestrekken als Fixpunkt zu betrachten und die vorbeschriebene Rechnung durchzuführen.

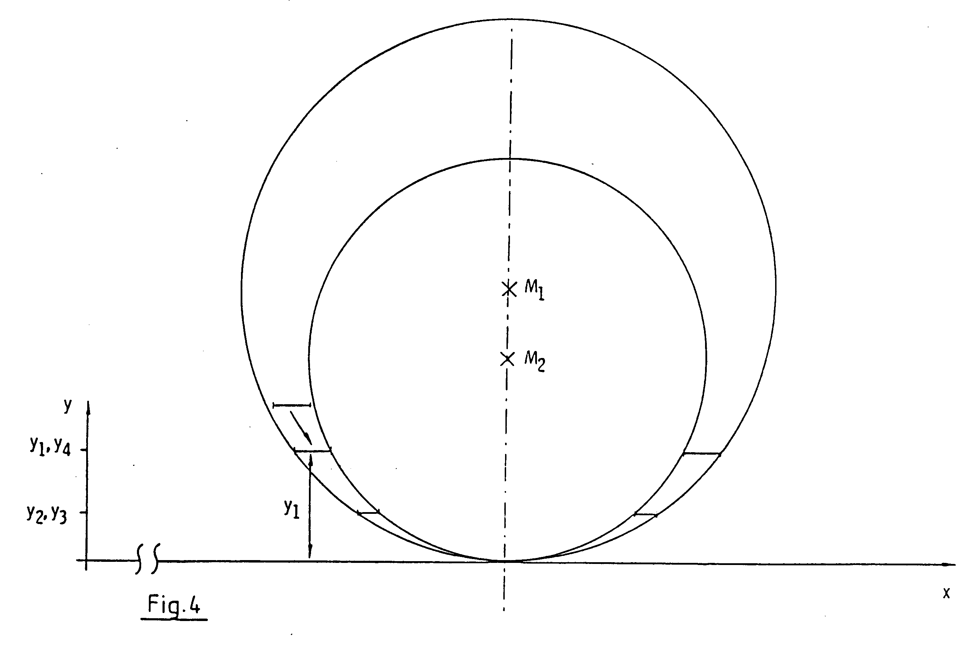

Die Meßeinrichtung kann auf einfache Art und Weise, beispielsweise mit Hilfe von zwei Lehrenradsätzen, justiert werden. Diese Lehrenradsätze weisen bekannte Durchmesser auf. Es sollen dies Radsätze sein mit zylindrischem Profil, deren Durchmesser nach Möglichkeit einerseits am oberen und andererseits am unteren Rand des Meßbereichs der Maßanlage liegen. Diese Durchmesser werden dem Rechner eingegeben. Nachdem nun die Lehrenradsätze die Meßstrecke durchlaufen haben, stehen im Ausführungsbeispiel dem Rechner jeweils vier Verschiebestrecken zur Verfügung, die gebildet werden durch die Ansprechzeitpunkte der vier Taster T1 bis T4 und dem Zeitpunkt, zu dem sich der Mittelpunkt eines Rades des Lehrenradsatzes auf einer Mittellinie der Meßanlage befunden hat. Dieser Zeitpunkt läßt sich ausdrücken durch den Zeitmittelpunkt zwischen dem Austrittsaugenblick dieses Rades aus der ersten Lichtschranke L1 und dem Eintrittsaugenblick in die zweite Lichtschranke L2. Dieser für beide Lehrenradsätze gleiche Aufenthaltspunkt ist durchmesserunabhängig und bildet das Bindeglied zwischen dem Überrollvorgang beim kleineren und beim größeren Lehrenradsatz. Der Rechner bildet nun Verschiebestreckendifferenzen, die sich jeweils ergeben aus Verschiebestrecke des Tasters T1 bei Kalibrierung 1 minus Verschiebestrecke des Tasters T1 bei Kalibrierung 2 usw., so daß pro Taster eine Streckenlänge wie in Figure 4 dargestellt vorliegt, die parallel zur X-Achse in den Zwischenraum zwischen dem kleinen und dem großen Kreis eingefügt werden muß. Der Schnittpunkte mit den beiden Kreislinien ergeben dann die Y-Koordinatenwerte der Tastpunkte, wobei sich die X-Werte aus der Zurückrechnung der Ansprechzeitpunkte innerhalb einer Kalibrierung ergeben. Diese Methode ermöglicht es, die Meßanlage mit einem für die oben beschriebene Rechnung aufgestellten Programm mit relative geringem Aufwand einzumessen. Dies erleichtert insbesondere das Einrichten und Überprüfen der Meßanlage hinsichtlich Alterungs- und Umwelteinflüssen, die sich im praktischen Betrieb ergeben können.

Die Meßanlage ermöglicht es erstmals eine Durchmesserbestimmung an Rädern von eingebauten Radsätzen bei Bedarf auch während des Abrollens auf einer Schiene vorzunehmen. Zur Gestaltung der erfindungsgemäßen Meßanlage können weitgehend handelsübliche Bauelemente benutzt werden.

Es sei noch darauf hingewiesen, daß es für die Durchführung der beschriebenen Messung nicht darauf ankommt, daß das Rad tatsächlich rollt. Die Messung kann auch durchgeführt werden, wenn das Rad gleitet. Es kommt nur darauf an, daß das Rad die Meßeinrichtung passiert.

Eine weitere Ausführungsform einer Durchmessererfassungseinrichtung U wird nachfolgend beschrieben.

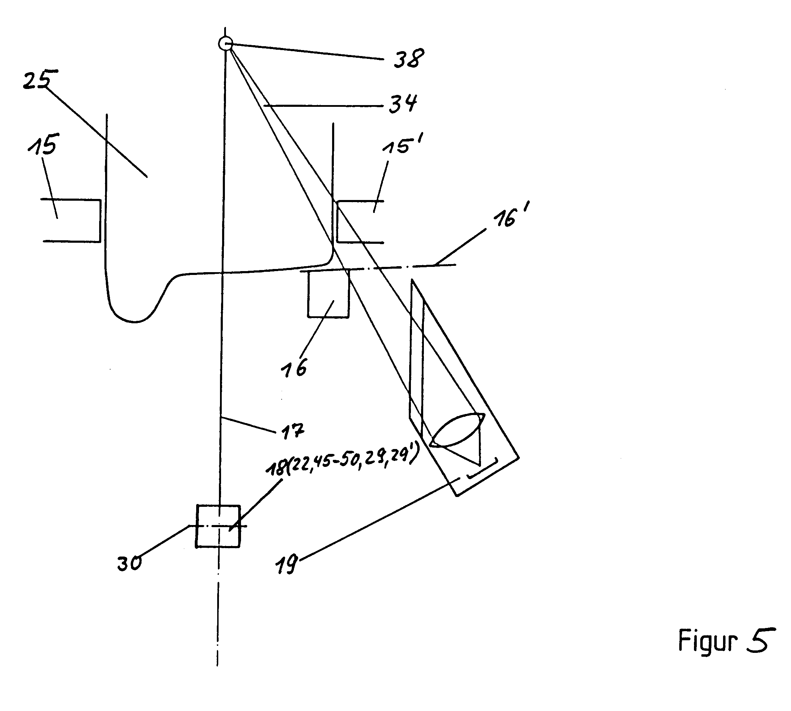

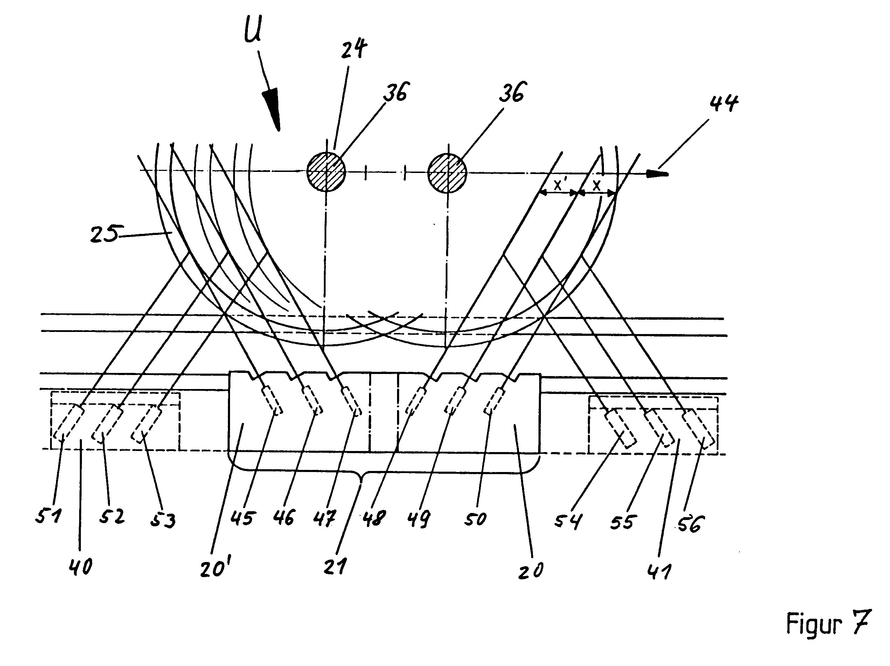

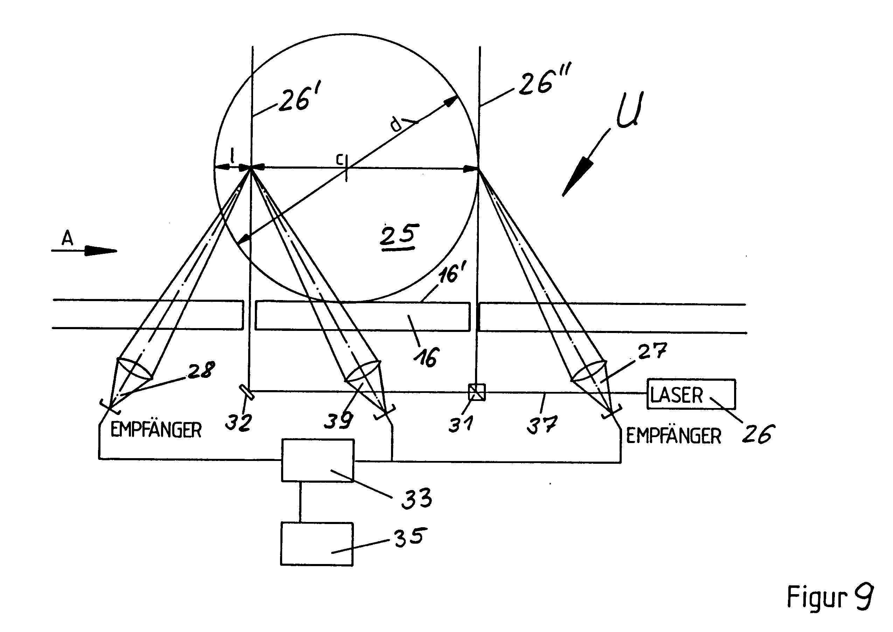

In Figur 9 ist eine einfache Anlage zur Ermittlung des Durchmessers d eines Rades 25 eines Eisenbahnradsatzes 24 (Figur 7) in ihrem schematischen Aufbau dargestellt. Auf einer Schiene 16, deren Oberkante eine Laufebene 16' bildet (siehe auch Figur 5), rollt ein Rad 25 eines Radsatzes 24 mit einer unbekannten Rollgeschwindigkeit in Richtung des Pfeils A nach Figur 9 ab. Wie der Figur 5 entnommen werden kann, wird dieses Rad 25 seitlich durch die Seitenführungen 15 und 15' auf der Schiene 16 geführt.

Der Durchmesser der Lauffläche des Rades 25 soll in der Meßebene 17 ermittelt werden. Hierzu weist die Anlage nach Figur 9 ein unterhalb der Schiene 16 angeordnetes Lasergerät 26 auf, das ein Strahlenbündel 37 in der Ebene 17, jedoch parallel zum Verlauf der Schiene 16, aussendet. Das Strahlenbündel 37 wird an einer Teilungseinrichtung 31 geteilt, und es wird an dieser Stelle ein Teilstrahl um 90° nach oben umgelenkt, so daß ein Strahlenbündel 26'' in der Meßebene 17 nach oben gerichtet ist. Es steht dieses Strahlenbündel 26'' sozusagen als Lichtschranke in der Meßebene 17. Der andere Teil des Strahlenbündels 37 geht durch die Teilungseinrichtung 31 hindurch und trifft in einem Abstand C, der bekannt ist und z. B. kleiner als der erwartete Durchmesser d ist, auf den Umlenkspiegel 32. Dort wird er um 90° nach oben umgelenkt, so daß dort ein Strahlenbündel 26' nach oben und parallel zum Strahlenbündel 26'' und in der Meßebene 17 verläuft.

Unter der Annahme, daß das Rad 25 mit konstanter Geschwindigkeit V in Richtung des Pfeils A nach Figur 9 auf der Laufebene 16' abrollt, wird die vordere Seite des Rades mit ihrer Umfangsfläche in der Meßebene 17 zunächst den Strahl 26' tangieren. Der Tangierungspunkt liegt im Erwartungsbereich 38 und es wird von dort Licht des Strahlenbündels 26' diffus remittiert und von der Empfangsoptik 39 registriert. Die Empfangsoptik 39 gibt ein entsprechendes Signal an eine Zeiterfassungseinrichtung 33 und es wird dort eine Zeitmarke gesetzt. Dies kann bedeuten, daß entweder eine Zeitmeßeinrichtung in Gang gesetzt wird, oder aber, daß bei einer durchlaufenden Zeitmeßeinrichtung der Schaltzeitpunkt der Empfangsoptik 39 markiert, also z.B. abgespeichert wird.

Das Rad 25 rollt nun mit konstanter Geschwindigkeit V in Richtung des Pfeils A nach Figur 9 weiter und tangiert nach Durchlaufen der Strecke C, wenn diese kleiner als der Raddurchmesser d ist, das Laser-Strahlenbündel 26''. Auch dort tritt wieder im Berührungspunkt zwischen der Umfangsfläche des Rades 25 und dem Strahlenbündel 26'' diffus remittiertes Licht auf, das nun von der Empfangsoptik 27 registriert wird, die ebenfalls in der Zeiterfassungseinrichtung 33 eine Zeitmarke setzt. Über eine Auswerteinrichtung 35 kann nun der Zeitbedarf für das Durchlaufen der Distanz C ermittelt und hieraus die Geschwindigkeit V des Rades 25 in der Auswerteeinrichtung 35 ermittelt werden. Diese Geschwindigkeit wird nun ebenfalls abgespeichert.

Das Rad 25 bewegt sich nun weiter mit konstanter Geschwindigkeit V in Richtung des Pfeils A, so daß beide Strahlenbündel 26' und 26'' von der Umfangsfläche des Rades 25 unterbrochen werden. Diese Erscheinung tritt jedoch nur ein, wenn die Strecke C kleiner ist als der Raddurchmesser d. Nach Durchlaufen der durchmesserabhängigen Strecke 1 tangiert das Strahlenbündel 26' die Rückseite der Umfangsfläche des Rades 25 in der Meßebene 17 und es wird dort wiederum Licht diffus remittiert, das nun von der Empfangsoptik 28 registriert wird, die ihrerseits wiederum in der Zeiterfassungseinrichtung 33 ein Zeitsignal setzt. Da die Geschwindigkeit des Rades 25 aus der vorbeschriebenen Messung bekannt ist, kann nunmehr die Strecke 1, die ja durchmesserabhängig ist, dadurch bestimmt werden, daß die bekannte Geschwindigkeit mit der Zeit für das Durchlaufen der Strecke 1 multipliziert wird. Dies kann in der Auswerteinrichtung 35 geschehen. Eine Addition dieser Distanz 1 mit der Distanz C ergibt den Durchmesser d des Rades 25. Die genannten Berechnungen können von der Auswerteinrichtung 35 durchgeführt werden.

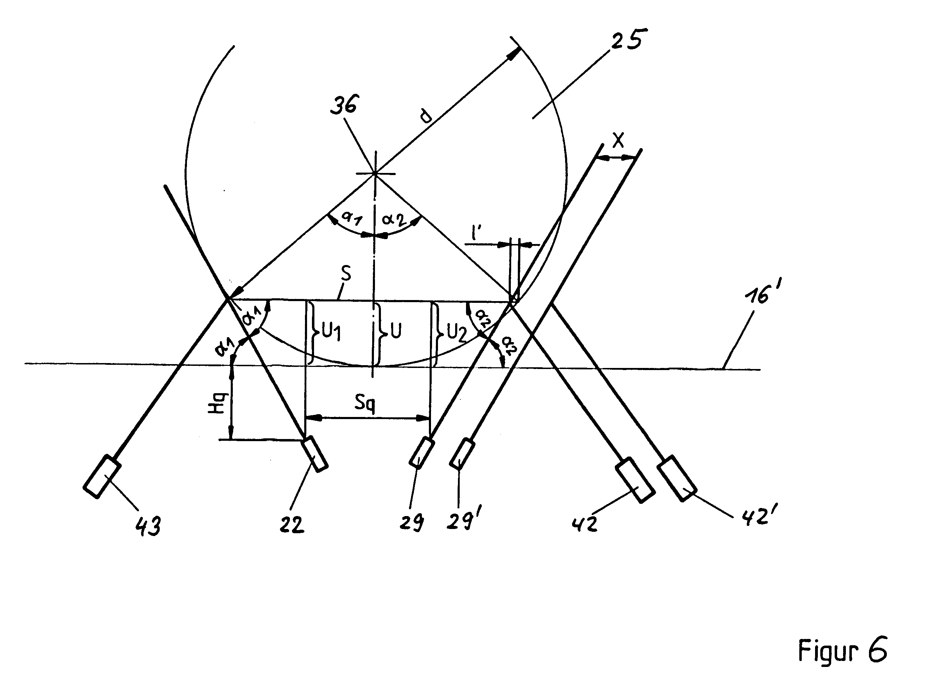

Die Anlage nach Figur 9 ist in ihrem prinzipiellen Aufbau ausreichend, um die Geschwindigkeit des Rades 25 und dessen Durchmesser zu bestimmen. Sie muß keineswegs ortsfest sein, sondern kann mindestens hinsichtlich der Bauelemente für die Strahlenbündel der Empfangsoptiken z. B. auf einem Meßwagen 42 angeordnet sein. Meßwagen 42 kann dann mittels eines nicht näher dargestellten Antriebs in Richtung des Pfeils A oder entgegengesetzt bewegt Meßwagens 42 der Radsatz z. B. ortsfest, so wird die gleiche Relativgeschwindigkeit erreicht und es kann somit das gleiche Meßergebnis ermittelt werden. Meßwagen 42 kann aber auch mit einer an sich bekannten Wegmeßeinrichtung 43, 44 zusammenarbeiten. Es muß dann nicht mehr die Geschwindigkeit des Meßwagens 42 sondern nur noch sein Verfahrweg ermittelt werden, wobei Anfang und Ende dieses Weges durch die Berührung der Strahlenbündel tangential am Radumfang bestimmt wird. Wenn eine Anordnung nach Figur 9 möglich ist, reicht bereits der Strahl 26' mit den Empfängern 28 und 39. Bei einer Bewegung in Richtung des Pfeils A registriert zunächst Empfänger 28 die Berührung, wodurch die Wegmeßeinrichtung 43, 44 über die Auswerteeinrichtung 35 aktiviert werden kann. Ist der Durchmesser d des Rades 25 durchquert, wird dies vom Empfänger 39 registriert, der die Wegmessung stoppt. Der zurückgelegte Weg und damit der Durchmesser d kann nun in der Auswerteeinrichtung 35 errechnet werden. Müssen geneigte Strahlenbündel verwendet werden (z. B. Figur 6) so sind mindestens zwei notwendig, wie z. B. die Strahlenbündel 22 und 29 nach Figur 6.

Da es jedoch wünschenswert ist, möglichst exakt die Geschwindigkeit zu bestimmen, die das Rad 25 während des Durchlaufens der Strecke 1 aufweist, kann es sinnvoll sein, eine Geschwindigkeitsbestimmung möglichst nahe an diesem Bereich vorzunehmen. In einem solchen Fall ist es sinnvoll, ein drittes Strahlenbündel rechts vom Strahlenbündel 26'' und parallel zu diesem, anzuordnen. Es müßte dann die Empfangsoptik 39 auf den dort zu erwartenden Berührungspunkt dieses nicht dargestellten Strahlenbündels mit der Umfangsfläche des Rades 25 gerichtet werden. Der Abstand zwischen diesem dritten Strahlenbündel und dem Strahlenbündel 26'' könnte dann in der Größenordnung der durchmesserabhängigen Distanz 1 liegen. Diese Größenordnung ist bekannt, da der kleinste Durchmesser und der größte Durchmesser der Räder, die auf einer solchen Anlage vermessen werden sollen, bekannt ist. Es gelingt dann während des Durchlaufens der Strecke 1 gleichzeitig auch die in dieser Zeit bestehende Geschwindigkeit des Rades 25 zu bestimmen, so daß eine höhere Sicherheit und Genauigkeit bei der Errechnung der Strecke 1 erreicht wird. Insgesamt ist die Empfindlichkeit der verschiedenen Empfangsoptiken so auszulegen, daß von der jeweiligen Empfangsoptik der gesamte Erwartungsbereich 38, in dem ein Berührungspunkt zwischen der Umfangsfläche des Rades 25 und einem Strahlenbündel bei kleinstem und bei größtem zu messendem Rad auftritt, überdeckt wird. Gelingt dies nicht, muß der Meßbereich der Anlage in Abhängigkeit vom erfaßbaren Erwartungsbereich 38 eingeengt werden und es muß bei Über- oder Unterschreitung dieses Meßbereichs die jeweilige Empfangsoptik neu justiert werden. Bei der konstruktiven Ausführung einer solchen Meßbereichs die jeweilige Empfangsoptik neu justiert werden. Bei der konstruktiven Ausführung einer solchen Meßeinrichtung muß selbstverständlich darauf geachtet werden, daß der von der Empfangsoptik zu erfassende Bereich frei ist von lichtundurchlässigen Hindernissen. In Figur 5 ist beispielsweise die Seitenführungsschiene 15' in diesem Bereich entweder auszusparen oder im notwendigen Umfang höher zu legen.

Die Figur 5 könnte eine Ansicht in Richtung des Pfeils A nach Figur 9 darstellen. Der in Figur 5 dargestellte Laser 18 ist um die Achse 30 schwenkbar und feststellbar angeordnet. Das vom Laser 18 ausgesandte Strahlenbündel liegt in der Meßebene 17. Es kann in der Darstellung nach Figur 5 der Laser 18 jedoch auch beispielsweise als Umlenkspiegel 32 (Figur 9) angesehen werden und man könnte dann die Darstellung nach Figur 5 auch betrachten als eine solche Darstellung, die sich ergibt, wenn in Figur 9 das Rad 25 um die Distanz 1 weiter in Richtung des Pfeiles A bewegt worden ist, so daß das Strahlenbündel 26' den Radumfang in der Meßebene 17 tangiert. Es wird dann Licht 34 diffus remittiert im Erwartungsbereich 38, das von der Empfangsoptik 19 registriert wird. Der weitere Ablauf ist dann wie bereits beschrieben.

In vielen Fällen ist ein apparativer Aufbau nach Figur 9 nicht anwendbar, weil die Räder des Radsatzes so eingebaut und beispielseise an der Umgangsfläche von Bremsklötzen abgedeckt sind, daß die Strahlenbündel das jeweilige Rad nicht mehr im Bereich des größten Durchmessers tangieren können. Aber auch unter diesen Bedingungen ist es möglich, mit gleichem Meßverfahren und prinzipiell gleichem Aufbau der Vorrichtung die gewünschte Messung durchzuführen.

Die sich ergebende prinzipielle Situation ist dargestellt in Figur 6. Da nur noch der untere Bereich der Umfangsfläche des Rades 25 von Laser-Strahlenbündeln tangiert werden kann, eine solche Tangierung aber für die Messung notwendig ist, sind die Laser- Strahlenbündel entsprechend geneigt engeordnet, so wie in Figur 6 dargestellt. Hierbei ist jedem Laser- Strahlenbündel ein eigener Laser zugeordnet, so daß die Strahlenbündel über das jeweilige Lasergerät identifiziert werden. Nach Figur 6 sind für die Durchführung der Messung Lasergeräte 22 einerseits, sowie Lasergeräte 29 und 29' andererseits vorgesehen. Eine nicht näher dargestellte Ebene senkrecht zur Zeichenebene der Figur 6, die nach Figur 6 durch die Radsatzachse 36 verlaufen kann und parallel zu dieser liegt, teilt die Lasergeräte in zwei Gruppen. Hierbei besteht die links dieser Ebene angeordnete Gruppe aus im Ausführungsbeispiel nur einem Laser 22 und die rechts der genannten Ebene angeordnete Gruppe aus zwei Lasergeräten 29 und 29'. Die genannten Lasergeräte sind geneigt, so daß die Strahlenbündel unterschiedlicher Gruppen divergieren, während die Strahlenbündel gleicher Gruppen parallel zueinander verlaufen, wie an den Lasergeräten 29 und 29' erkennbar ist. Die Neigung der Laser 22 und 29 sowie 29' ist hierbei so bemessen, daß die Strahlenbündel das jeweilige Rad 25 tatsächlich tangieren können, ohne von irgendwelchen Bauteilen behindert zu werden. Hierbei ist es nicht erforderlich, daß der Winkel, der zwischen der genannten, senkrecht zur Zeilchenebene stehenden und durch die Radsatzachse 36 verlaufenden Ebene und dem Strahlenbündel 22 einerseits und dem Strahlenbündel 29 bzw. 29' andererseits betragsmäßig gleich groß ist.

Auch bei einer Einrichtung nach Figur 6 wird das Rad 25 in der zu Figur 9 bereits beschriebenen Weise von links nach rechts durch die Einrichtung hindurchgerollt, so daß zunächst das Strahlenbündel 22 die Umfangsfläche des Rades 25 in der Meßebene 17 tangiert. Dem Strahlenbündel 22 ist eine Empfangsoptik 43 zugeordnet, die in der bereits zu Figur 9 und Figur 5 beschriebenen Weise arbeitet. Der beschriebene Berührungspunkt des Strahlenbündels 22 mit dem Rad 25, das von links nach rechts sozusagen gegen das Strahlenbündel 22 anläuft, ist von der Empfangsoptik 43 nicht erfaßbar, so daß Empfangspotik 43 nicht reagiert. Das Rad 25 rollt in der beschriebenen Richtung weiter und tangiert nun das Strahlenbündel 29, wobei das hierbei diffus remittierte Licht von der Empfangsoptik 42 registiert wird, so daß hiervon in der bereits beschriebenen Weise eine Zeitmarke gesetzt wird. Der Radsatz rollt weiter, so daß das Rad 25 als nächstes auf seiner Rückseite wiederum vom Strahlenbündel 22 tangiert wird, wobei das von diesem Berührungspunkt diffus remittierte Licht nunmehr von der Empfangsoptik 43 erfaßt werden kann. Das Rad 25 hat nun zwischen den beiden zuletzt genannten Berührungszeitpunkten die durchmesserabhängige Strecke 1' zurückgelegt. Der Zeitbedarf für das Durchlaufen der durchmesserabhängigen Strecke 1' kann wiederum von der Auswerteeinrichtung 35 ermittelt werden. Unbekannt ist jetzt jedoch noch bei einer Anordnung nach Figur 6 die Geschwindigkeit des Rades 25. Diese kann jedoch von der Anlage nach Figur 6 ebenfalls sehr schnell ermittelt werden. Während sich das Rad 25 nämlich in der bereits beschriebenen Weise auf der Laufebene 16' durch die Anlage hindurchbewegt, wird von der Umfangsfläche des Rades nunmehr auch das Strahlenbündel 29' tangiert und es wird das an der Berührungsstelle diffus remittierte Licht von der Empfangsoptik 42' registriert, die ihrerseits wiederum eine Zeitmarke setzt. Da der Abstand X zwischen den Strahlenbündeln 29 und 29' bekannt ist, kann aus diesem Abstand und der Zeitdifferenz zwischen den Zeitmarken der Empfangsoptik 42 und 42' die Geschwindigkeit des Rades 25 errechnet werden. Dann aber ist es auch in der bereits zu Figur 9 beschriebenen Weise möglich, die Strecke 1' zu berechnen. Es ist dann weiter unter Berücksichtigung der konkreten Abmessungen der Anlage, also unter Berücksichtigung der Einbauhöhe $H_q$ und des Abstandes $S_q$ der Laser 8 und 29 und bei Berücksichtigung des Winkels $\alpha_1$ und $\alpha_2$ der Durchmesser d zu errechnen. Hierbei ist zu beachten, daß bei unterschiedlichen Winkeln $\alpha_1$ und $\alpha_2$ auch unterschiedliche Höhen U, also U1 und U2, für die Linie S entstehen.

Setzt man voraus, daß die Geschwindigkeit V des Rades 25 und der Zeitbedarf für das Durchlaufen der durchmesserabhängigen Strecke 1' vorab ermittelt wurden und somit bekannt sind, und auch die körperlichen Dimensionen für $H_q$ und $S_q$ sowie für $\alpha_1$ und $\alpha_2$ bekannt sind, dann läßt sich der Durchmesser d z. B. nach folgender Gleichung berechnen:

$$d = 2 \cdot \frac{V \cdot t + H_q \left( \dfrac{1}{\tan \alpha_1} + \dfrac{1}{\tan \alpha_2} \right) + S_q}{\sin \alpha_1 + \sin \alpha_2 - (1 - \cos \alpha_1) \cdot \dfrac{1}{\tan \alpha_1} - (1 - \cos \alpha_2) \cdot \dfrac{1}{\tan \alpha_2}}$$

Diese Gleichung läßt sich noch vereinfachen, wenn dafür gesorgt wird, daß $\alpha_1$ und $\alpha_2$ exakt gleich sind.

In Figur 7 ist eine Anordnung dargestellt, die prinzipiell aufgebaut ist wie Figur 6. Zur Verbesserung der Meßgenauigkeit und zur einfachen Erfaßung eines Beschleunigungsanteils der Bewegung des Rades 25 sind dort jedoch mehrere Laser 45 bis 47 einerseits und 48 bis 50 andererseits vorgesehen, wobei die Laser 45-47 in der zu Figur 6 bereits beschriebenen Weise bezüglich der Laser 48 - 50 divergierend angeordnet sind, wobei jeodoch die Laser 45 - 47 einerseits und die Laser 48 - 50 andererseits untereinander parallel zueinander verlaufen. Nach Figur 7 sind den Lasern 45 - 47 die Empfangsoptiken 51 - 53 und den Lasern 48 - 50 die Empfangsoptiken 54 - 56 zugeordnet. In der Anlage nach Figur 7 können die Laser 45 - 47 zu einem Sendemodul 20' und die Laser 48 - 50 zu einem Sendemodul 20 zusammengefaßt sein. Sie können in dieser Zusammenfassung eine Baueinheit bilden, die austauschbar ist. Es ist auch möglich, die Laser 45 - 50 zu einem Sendemodul 21 zusammenzufassen, das ebenfalls als Ganzes austauschbar gestaltet sein kann. Innerhalb der Sendemoduln 20, 20' oder 21 können selbstverständlich die Laser 45 - 50 in der zu Figur 5 bereits beschriebenen Weise um eine Achse, die der Achse 30 nach Figur 5 vergleichbar ist, schwenkbar und feststellbar angeordnet sein. Es ist ebenfalls möglich, die Empfangsoptiken 51 - 53 einerseits und 54 - 56 andererseits zu Empfangsmoduln 40 bzw. 41 zusammenzufassen. Hierbei kann es auch sinnvoll sein, daß auch die Empfangsoptiken um eine geeignete Achse schwenkbar und feststellbar angeordnet sind, so daß sie auf einen gewünschten Erwartungsbereich 38 eingerichtet werden können.

In Figur 7 bewegt sich der Radsatz, symbolisiert durch die Radsatzachse 36, mit dem in Figur 7 sichtbaren Rad 25 in Richtung des Pfeils 44 durch die Meßeinrichtung. Hierbei wird die Umfangsfläche des Rades 25 in der zu Figur 6 hinsichtlich des Strahlenbündels 22 bereits beschriebenen Weise zunächst von den Strahlenbündeln 45, 46 und 47 in der beschriebenen Reihenfolge tangiert, wobei jedoch die zugeordneten Empfangsoptiken 51, 52 und 53 den dabei entstehenden Berührungspunkt nicht erfassen können. Beim weiteren Durchgang durch die Einrichtung nach Figur 7 wird nun zunächst das Strahlenbündel 48 tangiert und es wird der entsprechende Berührungspunkt von der Empfangsoptik 54 erfaßt, die in der bereits beschriebenen Weise hierbei eine Zeitmarkierung setzt. Die weiteren Berührungspunkte mit den Strahlenbündeln 49 und 50 werden von den Empfangsoptiken 55 und 56 erfaßt, die ihrerseits ebenfalls jeweils Zeitmarkierungen setzen und es kann somit mit Hilfe der Zeitdifferenz zwischen der Zeitmarkierung der Empfangsoptik 54 und 55 einerseits und 55 und 56 andererseits jeweils eine Geschwindigkeit und bei Bedarf aus den Geschwindigkeitsunterschieden auch eine Beschleunigung errechnet werden, weil ja die zugehörigen Teilstrecken X und X' bekannt sind.

Auf der anderen Seite des Rades 25 wird, kurz nachdem der Berührungspunkt mit dem Strahlenbündel 48 passiert ist, das Strahlenbündel 45 die Umfangsfläche des Rades 25 in der Meßebene 17 tangieren und es wird der entsprechende Berührungspunkt von der Empfangsoptik 51 registriert, die eine Zeitmarke setzt. Die Zeitdifferenz zwischen der von der Empfangsoptik 54 und der Empfangsoptik 51 markierten Zeitpunkte ermöglicht mit der ermittelten oder noch zu ermittelnden Geschwindigkeit oder Beschleunigung des Rades 25 die Errechnung der durchmesserabhängigen Strecke, die in Figur 6 mit 1' bezeichnet wurde. Dieser Vorgang wiederholt sich bezüglich der Strahlenbündeln 46 und 47 und den zugeordneten Empfangsoptiken 52 und 53. Diese Mehrfachmessung ermöglicht eine Ermittlung der Geschwindigkeit und der Beschleunigung und ergibt eine höhere Sicherheit und Genauigkeit der Berechnung. Geschwindigkeit und Beschleunigung des Rades 25 können darüber hinaus noch einmal überprüft werden, durch deren Berechnung über die ja ebenfalls bekannten Abstände zwischen den Laser-Strahlenbündeln 45, 46 und 47. Auch in diesem Bereich wird ja von den Empfangsoptiken 51, 52 und 53 jeweils eine Zeitmarke gesetzt, so daß auch hier noch einmal eine Geschwindigkeits- bzw. Beschleunigungsberechnung durchgeführt werden kann. Außerdem können hierdurch Fehlmessungen durch Fehlstellen (wie z. B. Flachstellen), die sich zufällig am Berührungspunkt des Lasers mit dem Rad oder an dessen Aufstandspunkt befinden, vermieden werden.

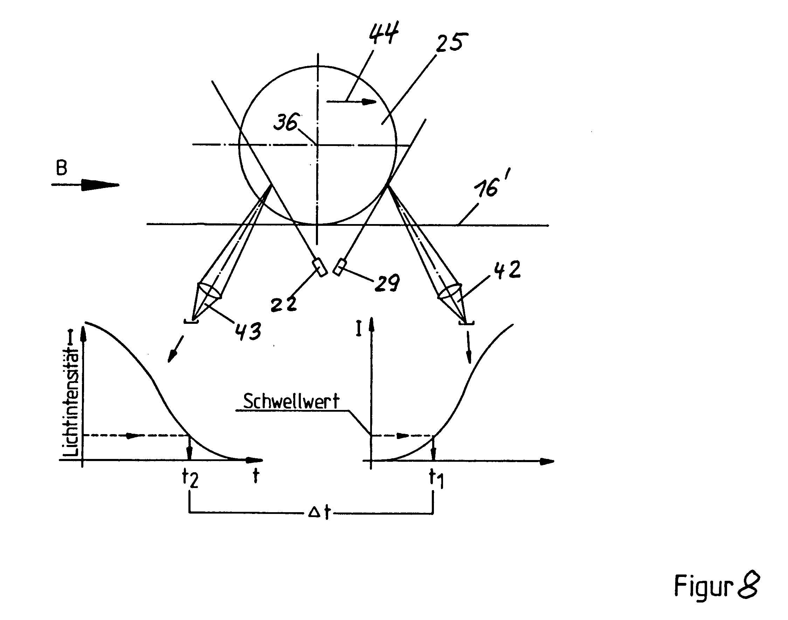

In Figur 8 ist in einer prinzipiellen Anordnung, die sich auf zwei divergierend verlaufende Laser 22 und 29 (wie in Figur 6) beschränkt, das Schaltprinzip für die Empfangsoptiken 42 und 43 dargestellt. Es ist zu erkennen, daß bei einem bestimmten Schwellwert der von dem Empfangsoptiken 42 und 43 registrierten Lichtintensität des diffus remittierten Lichtes 34 (Figur 5) die Empfangsoptik schaltet. Es wird nach Figur 6 von der Empfangsoptik 42 die Zeitmarke t1 und von der Empfangsoptik 43 die Zeitmarke t2 gesetzt. Die zwischen beiden Zeitmarken liegende Zeit Δt ist die Zeit, die verbraucht wurde, um die Durchmesserabhängige Strecke 1' zurückzulegen.

Durch eine spezielle, jedoch ansich bekannte Optik wird jedes Laser-Strahlenbündel so geformt, daß es im Erwartungsfeld eine möglichst schmale Taille bezitzt. Hierdurch wird die Meßgenauigkeit und die Wiederholgenauigkeit verbessert.

Um an den Empfangsoptiken Störeinflüsse zu minimieren, wird die Lichtquelle entweder schnell gepulst oder moduliert betrieben, wobei die Frequenz dabei auf die erwartete Vorschubgeschwindigkeit des jeweiligen Rades abgestimmt ist.

Sinnvoll ist es auch, die Ausgangsleistung der Lichtquelle beispielsweise durch einen Monitordetektor zu überwachen. Es sollte hierbei ein weiterer Monitordetektor eine Verschmutzung der Optik der Empfangsoptiken ermitteln, beispielsweise durch Erfassung des erhöhten Rückstreuanteils des Sendelichtes.

Wegen des doch recht rauhen Betriebes solcher Anlagen, ist es besonders vorteilhaft, die gesamte Sendeeinheit staub- und wasserdicht zu kapseln. Hierbei wird sinnvollerweise das Ausgangsfenster der Sendeeinheit zusätzlich durch Schutzklappen und/oder Pressluftabstrahlung vor dem Verschmutzen geschützt.

Die Empfangsoptiken, die das remittierte Licht empfangen, können im Prinzip im gesamten Halbraum vor der Radoberfläche angebracht werden, vorzugsweise jedoch dort, wo sie am wenigsten einer Beschädigung ausgesetzt sind und trotzdem maximales Signal bekommen. Jeder Empfänger weist hierbei ein Schutzfenster auf, welches gegen Verschmutzung durch einen Luftvorhang und gegen Feuchtigkeit und Beschlagen durch Wischer und/oder Heizsysteme geschützt ist. Im Empfänger bildet eine Abbildungsoptik das Erwartungsfeld auf einem fotoempfindlichen Detektor ab, der dann das einfallende Licht, wie zu Figur 8 beschrieben, in ein elektrisches Signal umwandelt. Hierbei kann ein zusätzlicher Lichtfilter, der auf das Senderlicht abgestimmt ist, der Signalverbesserung dienen.

Nachfolgend soll nun eine Ausführungsform einer Profilerfassungseinrichtung beschrieben werden.

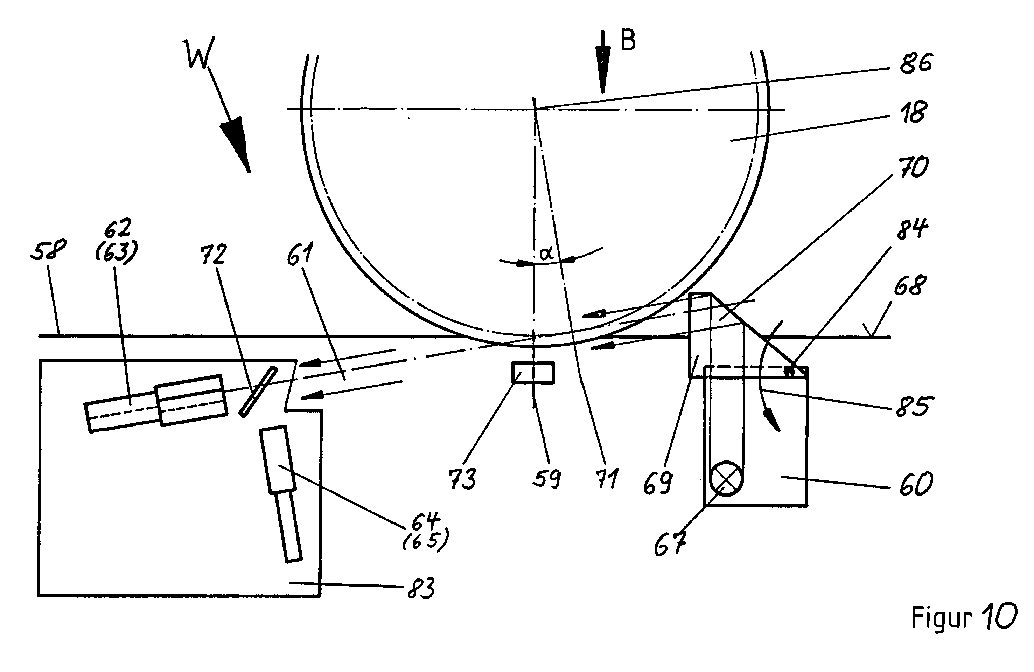

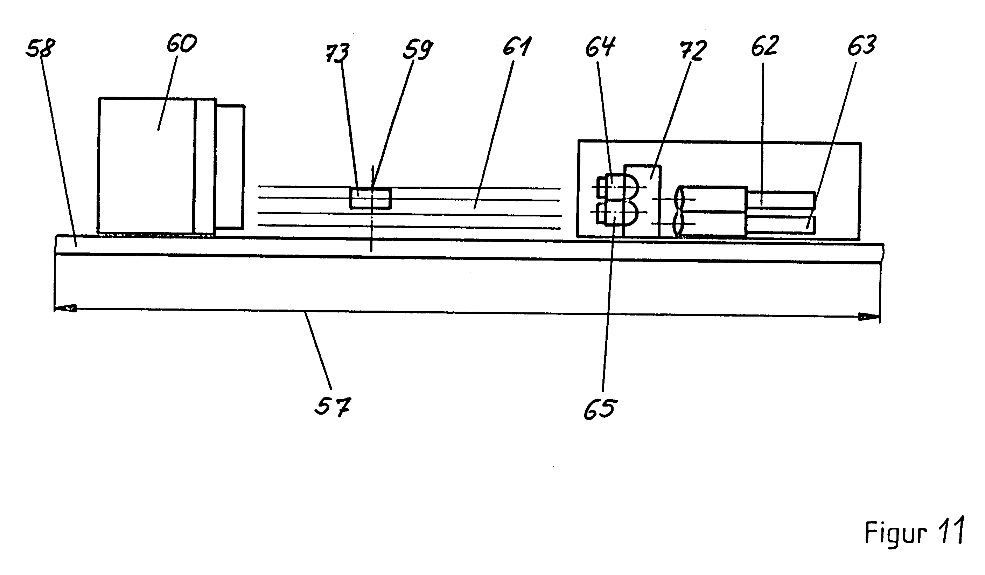

Die Figur 10 zeigt den schematischen Aufbau einer Einrichtung der genannten Art. Figur 11 zeigt eine Draufsicht nach Figur 10 (Ansicht in Richtung des Pfeils B nach Figur 10). In einer Meßstrecke 57 ist eine Hilfsschiene 58 verlegt, auf der die z.B. ein Rad 18 eines nicht näher dargestellten Radsatzes am äußeren Bereich der Lauffläche abrollt. Das Rad is Bestandteil eines Radsatzes, der eingebaut ist in einen Waggon oder als angetriebener Radsatz als Radsatz eines Triebfahrzeugs. Das jeweilige Fahrzeug rollt während des Meßvorganges langsam durch die Meßstrecke 57.

Unterhalb der Rollebene 68 des Hilfsgleises 58 ist eine Trägerplatte 83 vorgesehen, auf der vier CCDKameras 62-65 angeordnet sind, die in zwei Baugruppen aufgeteilt sind. Es sind die einerseits die Kameras 62 und 63 und die winklig hierzu angeordneten Kameras 64 und 65. Diese beschriebenen Kameras 62 - 65 befinden sich in der Darstellung nach Figur 10 links einer Meßpositionsebene 59, auf deren rechter Seite in ausreichendem Abstand zu dieser Meßpositionsebene 59 eine Beleuchtungseinrichtung 60 angeordnet ist. Die Beleuchtungseinrichtung 69 weist ebenfalls unterhalb der Rollebene 68 eine Lichtquelle 67 auf, wobei das Licht der Lichtquelle 67 in einer Umlenkeinrichtung 69 über entsprechende Umlenkmittel 70, wie z. B. Planspiegel, umgelenkt wird. Die Lichtquelle 67 sendet planparalleles Licht aus und es wird das zugeordnete planparallele Lichtbündel 61, das von den Umlenkmitteln 70 umgelenkt ist, tangential zum Profil des Rades 18 abgestrahlt. Die Umlenkeinrichtung 69 und die Umlenkmittel 70 befinden sich hierbei oberhalb der Rollebene 68, so daß die zugeordnete Umlenkeinrichtung 69 überrollbar ausgebildet sein muß. Dies kann dadurch geschehen, daß die Umlenkeinrichtung 69 über einen Gelenkpunkt 84 schwenkbar an der Beleuchtungseinrichtung 60 angeordnet ist. Sie kann hierbei beispielsweise über eine Feder in Arbeitsposition nach Figur 10 gehalten werden und vom darüber rollenden Rad 18 in Richtung des Pfeils 85 verschwenkt werden. Ist das Rad 18 darüber gerollt, so wird die Umlenkeinrichtung 69 von der nicht näher dargestellten Feder wieder in Ausgangsposition zurückgeklappt.

Im Ausführungsbeispiel nach den Figuren 10 und 11 sollen die Kameras 62 - 65 mit ihrer Trägerplatte 83 fest installiert sein, so daß sie notwendigerweise unterhalb der Rollebene 68 angeordnet sein müssen. Das planparallele Lichtbündel 61 muß daher, um die Kameras 62 bis 65 zu erreichen, mit der Rollebene 68 einen Winkel bilden so daß auch die Meßebene 71 als eine Ebene senkrecht zum planparallelen Lichtbündel 61 und durch den Mittelpunkt 86 des Rades 18 verläuft, einen spitzen Winkel $\alpha$ bilden muß. Allerdings muß hier betont werden, daß die Genauigkeit, mit der die Meßebene 71 im Augenblick der Messung tatsächlich den Mittelpunkt 86 erreicht, innerhalb der durch die Abbildungsoptiken erreichten Toleranzen liegt.

Das planparallele Lichtbündel 61 wird auf der linken Seite der Meßpositionsebene 59 von einem an der Trägerplatte 83 angeordneten halbdurchlässigen Spiegel 72 geteilt. Ein Teil des Lichtes des planparallelen Lichtbündels 61 wird von den in Richtung des Verlaufs dieses Lichtbündels angeordneten und danach ausgerichteten Kameras 62 und 63 und der andere Teil von den rechtwinklig dazu angeordneten Kameras 64 und 65 aufgenommen, nämlich der Teil, der von dem Spiegel 72 umgelenkt wird. Die Anordnung und Ausrichtung der Kameras 64 und 65 hängt somit von der Umlenkrichtung des Spiegels 72 ab. Um die Einrichtung zu aktivieren und die Messung durchzuführen, kann eine Schalteinrichtung 73, beispielsweise in Form eines Schienschalters, vorgesehen sein, die dann, wenn ein Rad 18 sich in der richtigen Meßposition befindet, die Anlage einschaltet, so daß eine noch zu beschreibende Messung durchgeführt wird.

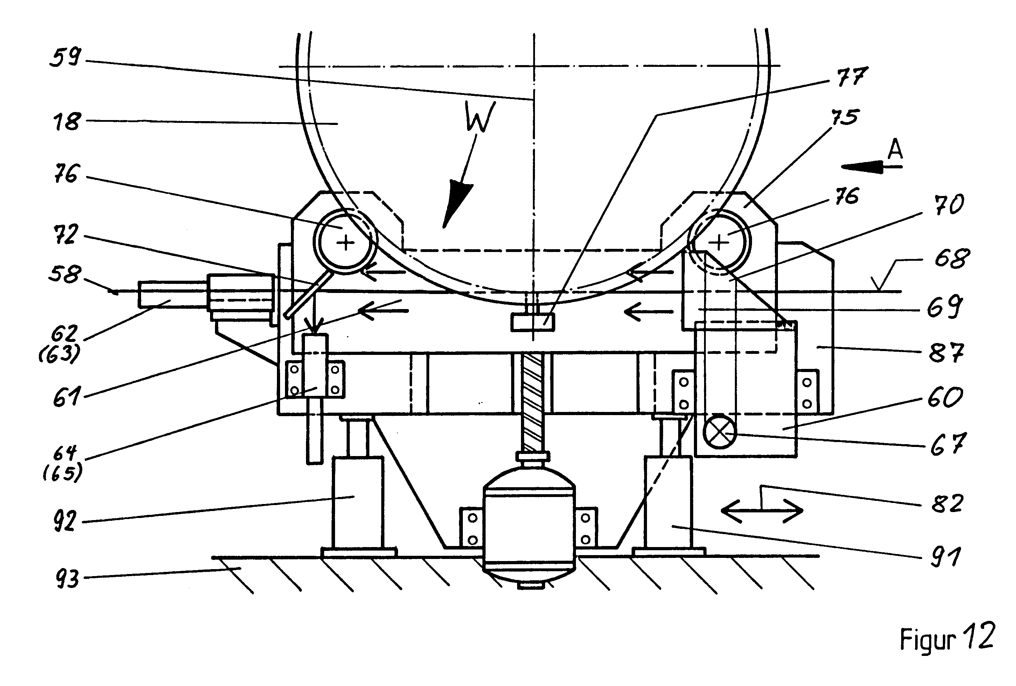

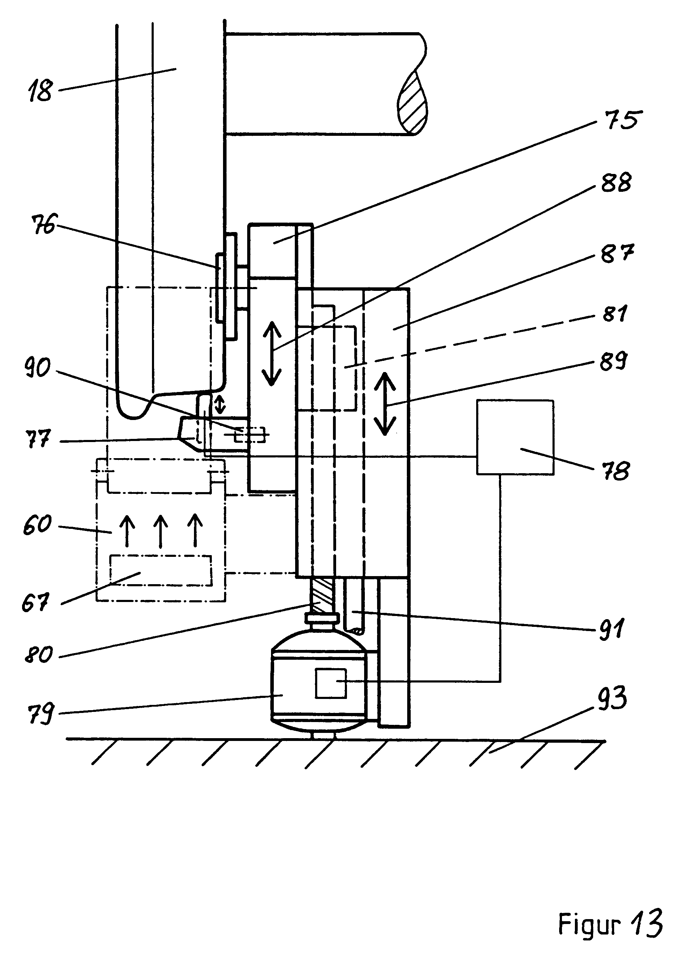

Eine Bauvariante zu der Meßeinrichtung nach den Figuren 10 und 11 ist dargestellt in den Figuren 12 und 13. Nach dieser Bauvariante rollt ein nicht näher bezeichneter Radsatz jeweils mit einem Rad 18 auf der Rollebene 68 des Hilfsgleises 58 in die Meßstrecke ein welch jedes im Bereich einer festgelegten Meßpositionsebene 59 von einem Stützrollenpaar 76 dadurch übernommen wird, daß dieses Stützrollenpaar 76 mindestens vertikal bewegt wird und damit das jeweils zugeordnete Rad 18 von der Rollebene 68 um einen für die Durchführung der noch zu beschreibenden Messung ausreichenden Betrag abhebt. Das Rad 18 wird dann hierdurch vom Stützrollenpaar 76 drehbar gestützt. Soll nur eine Messung an einem Punkt des Umfangs durchgeführt werden, so kann das Stützrollenpaar 76 auch als starre, undrehbare Trageinheit ausgebildet sein.

Das Stützrollenpaar 76 is drehbar gelagert in einem Stützrollenträger 75, der seinerseits in Form eines Schlittens vertikal beweglich an einem Bett 87 angeordnet ist. Hierzu kann am Bett 87 ein Motor 79 vorgesehen sein, der beispielsweise als Schrittmotor ausgebildet sein kann, wobei dieser Motor 79 eine Gewindespindel 80 antreibt, die über eine Gewindemutter 81 mit dem Stützrollenträger 75 verbunden ist. Treibt der Motor 79 die Gewindespindel 80 an, dann erfolgt über die Gewindemutter 81 eine entsprechende Vertikalverschiebung des Stützrollenträgers 75 - je nach Drehrichtung des Motors 79 - in Richtung des Pfeils 88. Am Stützrollenträger 75 ist noch ein Tastorgan 77 vorgesehen, mit dem ertastet wird, wie tief das vom Stützrollenpaar 76 übernommene und abgestützte Rad zwischen dem Stützrollenpaar 76 durchhängt. Dieser Durchhang ist abhängig vom Durchmesser des Rades 18. Die Kenntnis der Durchhanglage ist erforderlich zur Ausrichtung des planparallelen Lichtbündels 61. Das Tastorgan 72 kann hierbei um eine Achse 90 nach Durchführung des Tastvorganges weggeschwenkt werden. Dies kann automatisch oder manuell geschehen, vorzusweise jedoch automatisch.

Zur Ermittlung des Durchhanges können natürlich auch andere Maßnahmen als das beschriebene Tastorgan vorgesehen sein. Es ist möglich eine Ausrichtung des planparallelen Lichtbündels 61 mit Hilfe dieses Lichtbündels selbst durchzuführen, indem man an einer bestimmten Stelle auf der Kameraseite der Meßpositionsebene den Querschnitt des ankommenden Lichtstreifens ermittelt und in Abhängigkeit hiervon Beleuchtungseinrichtung und Kamera ausrichtet. Kommt kein Licht an, muß das Rad höher oder mindestens die Beleuchtungseinrichtung tiefer gefahren werden, solange, bis ein bestimmter Lichtquerschnitt ankommt oder aber dann, wenn der Lichtquerschnitt zu groß ist, so daß ein vollständiges Schattenbild nicht mehr erreicht werden kann, muß in umgekehrter Richtung verfahren werden. Hierbei muß die Verfahrbewegung keineswegs so sein, daß Beleuchtungseinrichtung und Kamera gemeinsam vertikal verfahren, sondern es ist auch denkbar, daß die Beleuchtungseinrichtung und die Kamera jeweils geschwenkt werden, so daß ihre Ausrichtung zueinander zwar beigehalten wird, aber das planparallele Lichtbündel im Bereich der Meßpositionsebene abgesenkt oder angehoben wird.

Das den Stützrollenträger 75 tragende Bett 87 wird seinerseits getragen von den Kolbenstangen von Hydraulikzylindern 91 und 92, die sich ihrerseits am Fundament 93 abstützen. Eine Synchronbewegung der Hydraulikzylinder 91 und 92 erzeugt eine entsprechende Vertikalbewegung des Bettes 87 in Richtung des Pfeils 89.

Als Fundament 93 kann auch ein entlang des Gleises oder Hilfsgleises 58 verfahrbarer und nicht näher dargestellter Wagen benutzt werden.

Am Bett 87 ist in der in den Figuren 12 und 13 dargestellen Anordnung die Beleuchtungseinrichtung 60 auf der einen Seite der Meßpositionsebene 59 angeordnet. Auf der anderen Seite der Meßpositionsebene 59 und der Beleuchtungseinrichtung 60 gegenüberliegend sind am Bett 87 die Kameras 62 und 63 sowie als zweite Gruppe 64 und 65 befestigt. Auch der Umlenkspiegel 72 muß am Bett 87 befestigt sein. Die Lage der Beleuchtungseinrichtung 60 ist in Figur 13 strichpunktiert dargestellt.

Es ist weiterhin möglich die Hydraulikzylinder 91 und 92 mit ihren Kolbenstangen gelenkig am Bett 87 zu befestigen, so daß es möglich wird, nur einen Hydraulikzylinder 91 oder 92 zu betätigen und hierdurch eine entsprechende Schwenkbewegung des Bettes 87 zu erzeugen. Es muß dann jedoch für einen Längenausgleich des Abstandes der Kolbenstangen untereinander gesorgt werden.

Rollt ein zu vermessender Radsatz mit seinen Rädern 18 auf dem Hilfsgleis 58 auf der Rollebene 68 ab, so kann unter der Voraussetzung, daß beispielsweise das Rad 18 in Figur 12 von links nach rechts rollt, der Hydraulikzylinder 92 abgesenkt sein und damit die linke Rolle 76 ebenfalls abgesenkt sein. Die rechte Rolle 76 kann in der in Figur 12 dargestellten Position verbleiben, so daß das Rad 18 gegen diese rechte Rolle 76 anläuft und dort gestoppt wird oder, bei entsprechender Konstruktion, die ganze Einrichtung mitschleppt. Sodann kann der Hydraulikzylinder 92 betätigt werden, so daß die linke Rolle 76 solange angehoben wird, bis sie ebenfalls zur Anlage am Rad 18 kommt. Nun können die Hydraulikzylinder 91 und 92 gemeinsam hochgefahren werden, so daß das Rad 18 vom Hilfsgleis um einen ausreichenden Betrag abgehoben wird.

Stellt das Tastorgan 77 einen zu tiefen Durchhang fest, so wird dies einer Steuereinrichtung 78 gemeldet, die ihrerseits den Motor 79 in Betrieb setzt und steuert und damit eine entsprechende Drehbewegung der Gewindespindel 80 verursacht. Hierdurch wird der Stützrollenträger 75 vertikal nach oben gefahren, so daß das Rad 18 ebenfalls entsprechend angehoben wird. Hierbei bleibt das Bett 87 in seiner vertikalen Position stillstehen. Abhängig von der Größe des ermittelten Durchhanges wird die notwendige Verfahrbewegung des Stützrollenträgers 75 vertikal aufwärts ermittelt und es wird der Motor 79 von der Steuerung 78 in der entsprechenden Position wieder stillgesetzt. Da sich die Beleuchtungseinrichtung 60 sowie die Kameras 62 bis 65 mit dem halbdurchlässigen Spiegel 72 am Bett 87 befinden und Bett 87 seine relative Lage zu den genannten Einrichtungen, so daß hierdurch die Eintauchtiefe der Umfangsfläche des Rades 18 in das planparallele Lichtbündel 61 bestimmt werden kann. Nach erfolgtem Meßvorgang werden die Hydraulikzylinder 92 und 91 abgesenkt und das Rad 18 zurück auf das Hilfsgleis 58 gesetzt, so daß es dort weiterrollen kann. Es ist aber auch denkbar, daß während des ganzen Meßprozesses mit angehobenem Rad 18 die gesamte Einrichtung über die Hydraulikzylinder 91 und 92 statt auf dem Fundament 93 auf einem entsprechenden, in Schienenlängsrichtung verfahrbaren, nicht näher bezeichneten Wagen angeordnet ist, der sich in Richtung des Pfeils 82 frei bewegen kann. Eine Fahrtunterbrechung des Zuges kann damit vermieden werden.

Der Meßvorgang selbst und dessen Auswertung erfolgt in beiden Ausführungsbeispielen auf gleiche Art und Weise. Wie bereits gesagt besteht die Beleuchtungseinrichtung z. B. aus einem Lichtkasten, in dem sowohl eine Dauerlichtbeleuchtung als auch eine Blitzbeleuchtung eingebaut ist. Die Dauerlichtbeleuchtung erleichtert hierbei die Justage- und Wartungsarbeiten. Hierbei können zur Erzeugung des Dauerlichtes HF-betriebene Leuchtstofflampen verwendet werden, wärend für die Blitzbeleuchtung Stabblitzlampen eingesetzt sein können. Hierbei werden die Blitzlampen sinnvollerweise doppelt ausgeführt und sind mit einer automatischen Umschaltung versehen, so daß beim Ausfall einer Lampe nicht ein Totalausfall der Einrichtung erfolgt, sondern die Einrichtung weiter bis zum Reparturintervall in Betrieb bleiben kann.

Das Licht wird z. B. über eine Mattscheibe diffus gestreut, parallelisiert und in der bereits beschriebenen Weise über einen Spiegel auf den Meßort gerichtet, so daß ein planparalleles Lichtbündel 61 tangential zur Umfangsfläche des Radsatzes abgestrahlt wird. Hierbei kann der bereits erwähnte Schienenschalter 73 die notwendige Triggerung des Blitzes vornehmen, so daß der richtige Zeitpunkt für den notwendigen Blitz erreicht werden kann.

Das Blitzlicht erzeugt ein Schattenwurfprofilbild, welches in den beschriebenen Ausführungsbeispielen von den ebenfalls bereits genannten vier Halbleiterkameras aufgenommen wird. Aus Platzgründen sind die Kameras in der dargestellten Weise winklig zueinander angeordnet, wobei die Bildaufteilung durch den als Strahlteiler wirkenden halbdurchlässigen Spiegel 72 vorgenommen wird. Es kann jede Kamera mit einem Zoom-Objektiv ausgerüstet sein, mit einer Maximalbrennweite von ca. 110 mm. Hierbei ist dem Objektiv

EP 0 212 052 B1

jeweils ein Blaufilter zur Unterdrückung des Infrarotanteils des Blitzlichtes vorgeschaltet. Die Brennweite des Objektives muß jedenfalls so sein, daß die Empfängerfläche jeder Kamera vollständig ausgefüllt ist. Alle Kameras 62 bis 65 werden von einer gemeinsamen Synchronquelle versorgt, die einen bildpunktgenauen Gleichlauf garantiert.

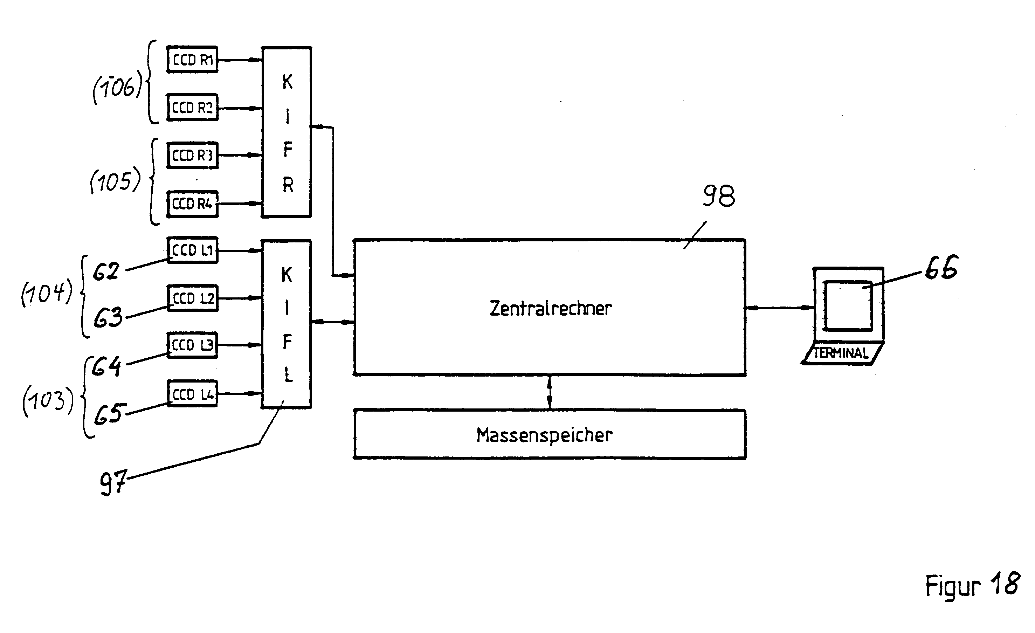

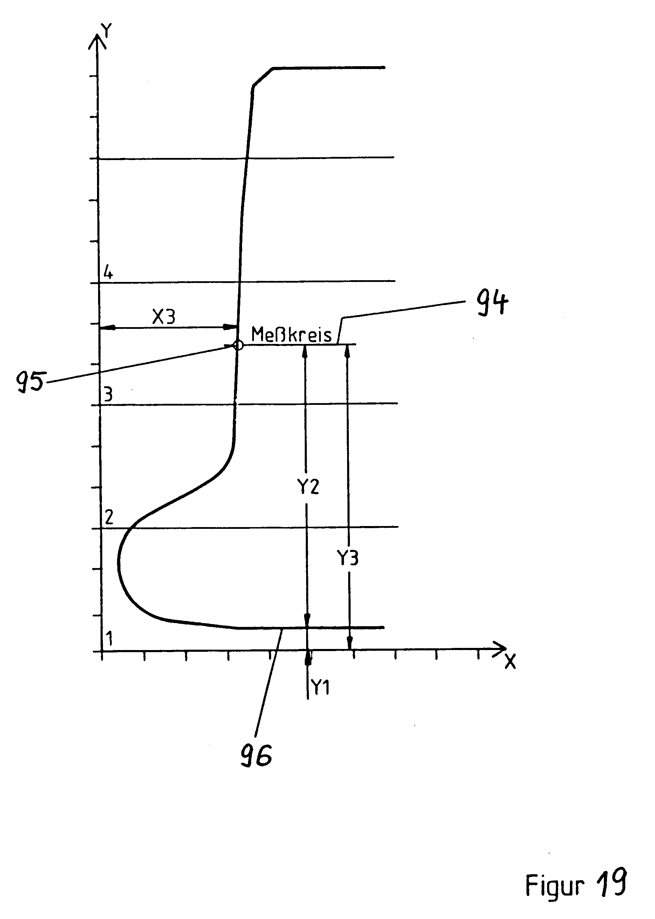

Da die Signale mehrerer Kameras von nur einem Rechner verarbeitet werden sollen, ist für jede Kamera separat eine Bildsignalvorverarbeitung erforderlich. Diese Vorverarbeitung hat den Vorteil, daß der nachfolgende Aufwand beim Hauptrechner niedrig gehalten werden kann. Außerdem wird hierdurch das Zusammenschalten einer nahezu beliebigen Anzahl von Kameras ermöglicht. Bei dieser Vorverarbeitung wird jeweils der Synchronanteil des Video-Signals abgetrennt und über eine selbstregelnde Schwelle aus dem Graubild ein Binärbild erzeugt. In diesem Binärbild wird nun in jeder Zeile der Schwarz-Weiß-Übergang des Profilverlaufs detektiert und als Koordinatenwert abgespeichert. Hierzu sind maximal 40 ms erforderlich. Dieser Prozeß läuft für jede Kamera parallel und synchron ab. Dies bedeutet, daß nach einem solchen Bilddurchlauf die komplette Profillinie als Datensatz existiert. Diese Daten werden dann in den Hauptrechner eingelesen, so daß intern im Rechner, sozusagen von diesen Koordinaten gebildet, eine Profillinie in einem rechnerinternen Koordinatensystem entsteht, wie in Figur 19 als Prinzip dargestellt. Die Profillinie ist hierbei innerhalb des Koordinatensystems (Figur 19) vom Rechner eindeutig festlegbar durch die Definition des sog. Meßkreises 94, der auf der Profillinie den Punkt 95 bildet. Die Lage des Punktes 95 in Y-Richtung von der Stirnseite 96 des Profils ist per Definition festgelegt. Es soll dies der Abstand Y 2 sein. Über die im Speicher des Rechners befindlichen Koordinaten kann der Rechner feststellen, in welchem Abstand Y 1 die Profillinie 96 verläuft und es kann damit der Rechner die Lage des Meßkreises mit dem Abstand Y 2 zur Stirnseite 96 festlegen. Der Meßkreis liegt dann im dargestellten Koordinatensystem im Abstand Y 3 von der Abzisse. Es ist aber auch der Abstand X 3 von der Ordinate des Bildpunktes der Konturlinie der im Meßkreis 94 liegt, bekannt, so daß im dargestellten Koordinatensystem die Lage des Punktes 95 eindeutig vom Rechner bestimmt werden kann. Es kann nun der Rechner mit diesem Punkt 95 ein Sollprofil in seinem internen Koordinatensystem so anordnen, daß der Punkt 95 des Sollprofils und der Punkt 95 des Istprofils deckungsgleich angeordnet sind. Danach ist es dann problemlos möglich, die Abweichungen der Koordinaten der einzelnen Punkte des Istprofils von den Koordinaten der einzelnen Punkte des Sollprofils zu ermitteln und beispielsweise an einem Bildschirm 66 (Figur 18) als Istprofillinie auszugeben. Ebenso könnte die Istprofilinie von einem Plotter ausgedruckt werden oder es könnten die rechnerinternen Daten auf andere sinnvolle Art und Weise weitergeleitet werden, beispielsweise einer Maschinensteuerung zur Nachbearbeitung des Radsatz zugeleitet werden. Da die Lage aller Kameras relativ zueinander bekannt ist und auch die Lage der Abbildungen in jeder Kamera bekannt ist, ist es weiter möglich, mittels der Auswerteeinrichtung den Seitenabstand der Profile und damit der Räder eines Radsatzes zueinander zu ermitteln.

Figur 18 zeigt den Schematischen Aufbau der Signalverarbeitung. Die Kameras 62, 63, 64 und 65 einer Seite, nämlich der linken Seite (die nicht bezeichneten Kameras stellen die Kameras der rechten Seite dar), geben ihre Signale zur Singalvorverarbeitung in ein Interface 97, in dem die bereits beschriebene Signalvorverarbeitung durchgeführt wird. Die Menge der ankommenden Daten wird in einem Massenspeicher abgelegt und es komuniziert das genannte Interface und der Massenspeicher jeweils mit dem Zentralrechner, der der jeweiligen Ausgabeeinheit - in Figur 18 der Bildschirm 66 - das Ergebnis zuführt.

Eine Alternative zur bisher beschriebenen Profilerfassungseinrichtung soll nachfolgend beschrieben werden.

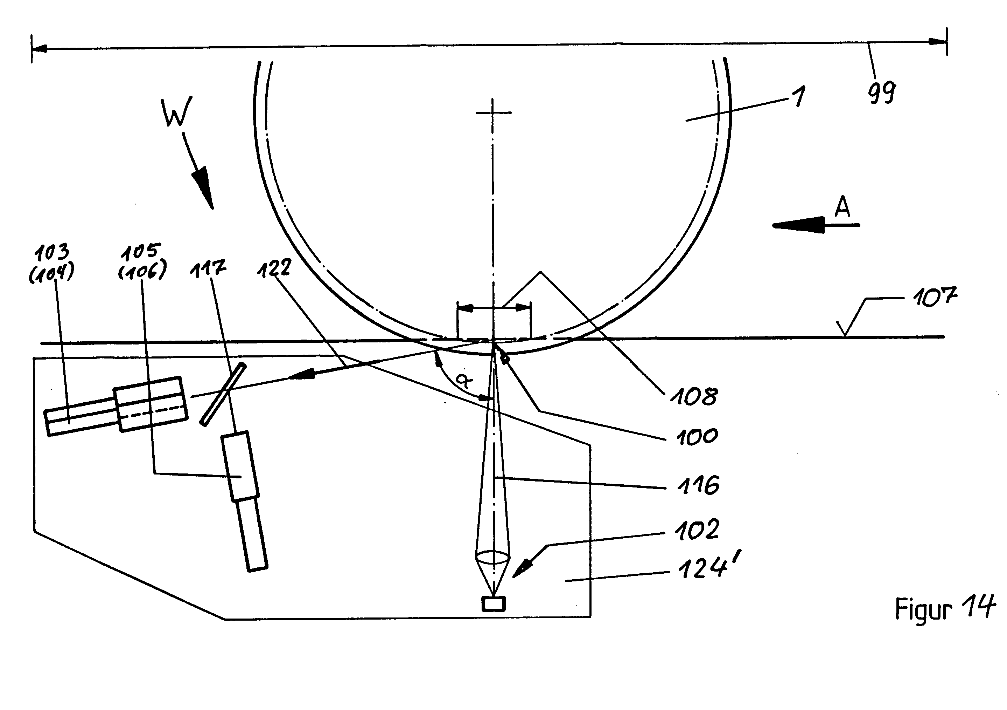

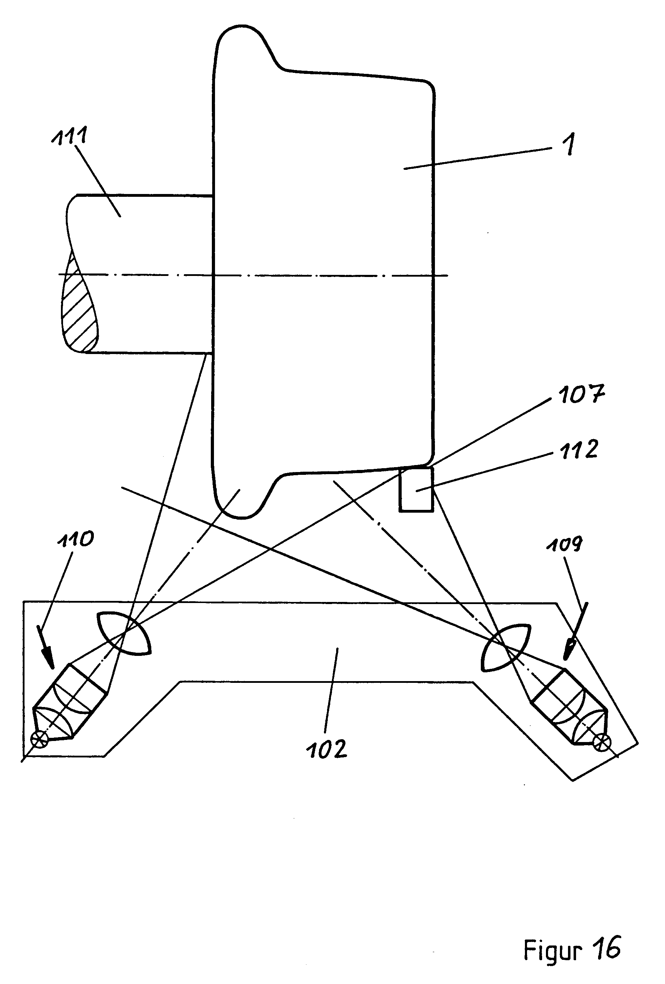

Die Figur 14 zeigt den schematischen Aufbau einer solchen Einrichtung in Seitenansicht. Figur 16 zeigt eine Ansicht in Richtung des Pfeils A nach Figur 14, jedoch ohne Darstellung der Kameras 103-106. In einer Meßstrecke 99 ist eine Hilfsschiene 112 verlegt, auf der ein Rad 1 eines nicht näher dargestellten Radsatzes am Uaußeren Bereich der Lauffläche abrollt. Das Rad ist Bestandteil eines Radsatzes, der eingebaut ist in einen Waggon oder als angetriebener Radsatz in ein Triebfahrzeug. Das jeweilige Fahrzeug rollt während des Meßvorganges langsam durch die Meßstrecke 99.

Unterhalb einer Bewegungsebene 107 der Hilfsschiene 112 ist ein Träger 124', ausgebildet als Platte, vorgesehen, auf dem vier sog. CCD-Kameras 103-106 angeordnet sind, die in zwei Baugruppen aufgeteilt sind. Es sind dies einerseits die Kameras 103 und 104 und die winklig hierzu angeordneten Kameras 105 und 106. Diese beschriebenen Kameras 103-106 befinden sich in der Darstellung nach Figur 14 links einer Meßposition 100. Es ist auch möglich die gleiche Kameraanordnung noch einmal rechts von der Meßposition 100 vorzusehen.

Vertikal unterhalb der Meßposition 100 ist eine Beleuchtungseinrichtung 107 vorgesehen, die zwei in Richtung der Radsatzachse 111 versetzt angeordnete Beleuchtungsquellen 109 und 110 trägt. Diese Beleuchtungsquellen 109 und 110 sind optisch so ausgestaltet, daß ihr Lichtstrahl 116 auf dem Profil des Rades 1 einen Lichtschnitt oder eine Lichtkante erzeugt. Beide Beleuchtungsarten sind im Stand der Technik bekannt und es muß daher hier nicht näher erläutert werden, wie ein Lichtschnitt oder eine Lichtkante erzeugt wird. Die Verwendung von zwei Beleuchtungsquellen 109 und 110 in der in Figur 16 dargestellten Anordnung sorgt darür, daß Schattenwirkungen beispielsweise vom Spurkranz oder von der Hilfsschiene 112 verhindert werden.

Da die Kameras 103-106 den Durchlauf eines Rades 1 durch die Meßstrecke 99 nicht behindern dürfen, müssen sie unterhalb der Bewegungsebene 107 angeordnet sein. Nach Figur 14 sind daher die Kameras 103 und 104 so angeordnet, daß sie das unter der Abstrahlrichtung 122 abgestrahlte Licht empfangen können, die Abstrahlrichtung 122 bildet mit dem Lichtstrahl 116 einen Winkel der kleiner als 90° aber größer als 60° ist. Hierdurch allerdings tritt bei Anordnung nach Figur 14 eine Profilverzerrung auf, die später im Rechner wieder rückgängig gemacht werden muß. Dies ist jedoch ohne weiteres möglich. Zur Erreichung einer höheren Auflösegenauigkeit der Abbildung sind zwei weitere Kameras 105 und 106 vorgesehen, die aus Platzgründen jedoch winklig zu den Kameras 103 und 104 angeordnet sind, wie die Darstellung nach Figur 14 erkennen läßt. Eine Umlenkeinrichtung 117 sorgt als Strahlteiler, z. B. in Form eines halbdurchlässigen Spiegels dafür, daß auch die Kameras 105 und l06 von dem abgestrahlten Licht beaufschlagt werden. Es ist jedoch auch die Verwendung von Lichtleitfasern möglich.

Damit die Kameras 103-106 richtige Daten für die nachfolgende Auswerteelektronik liefern können, muß eine Profilaufnahme möglichst genau in der Meßposition 100 erfolgen. Es müssen daher Mittel vorgesehen sein, die diese Meßposition erfassen und dann Kamera und Beleuchtung auslösen. Die Praxis zeigt, daß dies beispielsweise mit einem Schienenschalter möglich ist. Es sind im Handel hierzu brauchbare Schalter erhältlich, deren Schaltpunktstreuung ausreichend klein ist. Ein solcher Schienenschalter muß nicht notwendigerweise mechanisch oder elektromagnetisch aufgebaut sein. Es sind auch für den beschriebenen Einsatzzweck anwendbare optische Schalter erhältlich oder Verfahren möglich. Erreicht das Rad 1 seine Meßposition 100 in der Meßstrecke 99, so wird von der beschriebenen Schalteinrichtung ein Beleuchtungsblitz der Beleuchtungseinrichtung 102 ausgelöst und es werden gleichzeitig die Kameras 103-106 aktiviert. Es ist nun in den Kameras 103-106 ein Profilbild entstanden, das für die Weiterverarbeitung der Auswerteelektronik zugeführt werden kann.

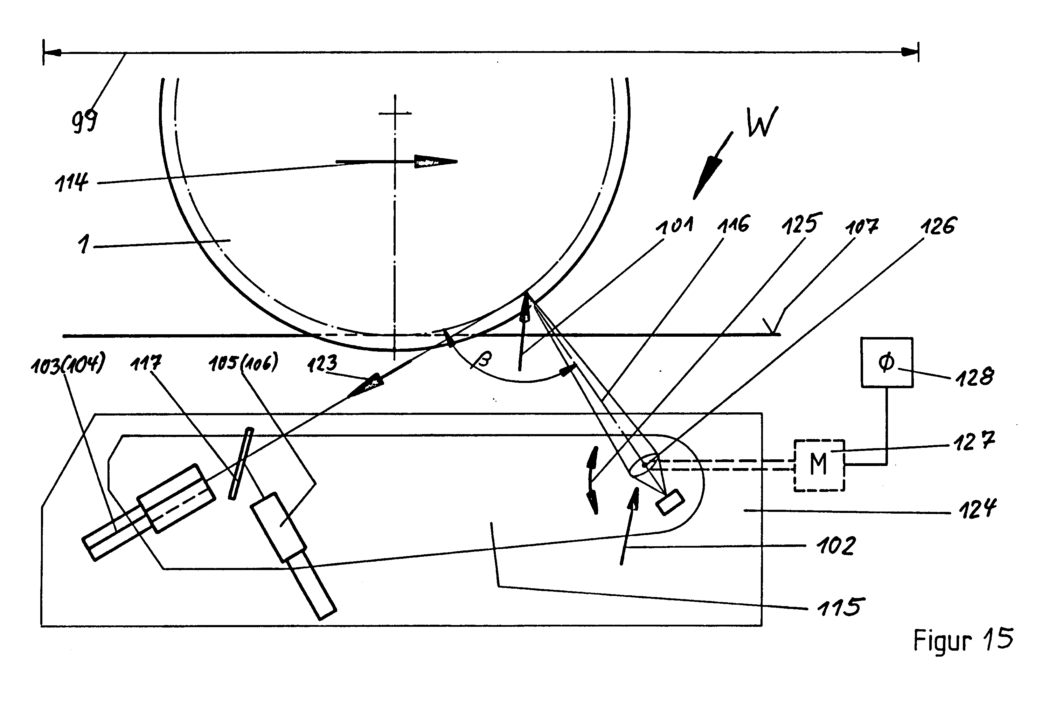

Wie Figur 15 zeigt, ist es durch eine geringe Veränderung der Anordnung von Beleuchtungseinrichtung 102 und den Kameras 103-106 möglich, den Bereich füt die Meßposition 101 zu vergrößern und gleichzeitig eine verzerrte Abbildung des Profils in den Kameras 103-106 zu vermeiden, wodurch auch der entsprechende Rechneraufwand für die Entzerrung vermieden werden kann. Hierzu ist es beispielsweise möglich, die Beleuchtungseinrichtung 102 und die Kameras 103-106 so anzuordnen, daß zwischen dem Lichtstrahl 116 und der Abstrahlrichtung 123 ein Winkel $\beta$ von <90° vorhanden ist. Damit hierbei die Kameras 103-106 unterhalb der Bewegungsebene 107 verbleiben können, muß der Lichtstrahl 116 radial und unter einem Spitzen Winkel zur Bewegungsebene 107 auf die Umfangsfläche des Rades 1 auftreffen. Rad 1 bewegt sich bei einer Ausführungsform nach Figur 15 in Richtung des Pfeiles 114 durch die Meßstrecke 99 hindurch. Es ist jedoch auch eine entgegengesetzte Bewegungsrichtung möglich.

Da bei einer Anordnung nach Figur 15 auch die Bedingung erfüllt sein muß, daß im Meßpunkt 101 der Lichtstrahl 116 radial auf die Umfangsfläche des Rades 1 auftrifft, muß der Lichstrahl 116 seine Neigung in Abhängigkeit vom Durchmesser des ankommenden Rades 1 ändern können. Gleichzeitig aber muß sich entsprechend die Lage der Kameras 103-106 ändern. Dies wird dadurch erreicht, daß an einem Träger 124 eine Trageinrichtung 115 vorgesehen ist, die am Träger 124 um den Drehpunkt 126 schwenkbar angeordnet ist. Auf der Trageinrichtung 115 ist in dargestellter Anordnung die Beleuchtungseinrichtung 102 einerseits und sind die Kameras 103-106 andererseits angeordnet. Die Trageinrichtung 115 kann in Richtung des Pfeiles 125 mittels des Motors 127 geschwenkt werden. Die Konstruktion als solche ist nur schematisch dargestellt und kann in ihrer detaillierten Ausführung dem durchschnittlichen Fachmann überlassen werden. Motor 127 wird gesteuert von einer Steuereinrichtung 128, in die vorher der Durchmesser des ankommenden Rades 1 eingegeben wurde. Hierbei kann die Durchmesserangabe von einer im Meßbereich X angeordneten Durchmessererfassungseinrichtung der beschriebenen Art kommen.

Es ist jedoch bei einer Anordnung nach Figur 14 auch möglich, den Bereich für die Meßposition 100 dadurch zu erweitern, daß eine schnelle Mehrfachmessung in einem genügend kleinen Meßbereich 108 vorgenommen wird. Wird eine einseitige Anordnung der Kameras 103-106 wie nach Figur 14 verwendet, so ensteht im Rechner eine anwachsende und danach evtl. wieder abfallende Profilkontur. Da die Geschwindigkeit der hintereinanderfolgenden Aufnahmen bekannt ist und ebenfalls bekannt ist, daß das zu messende Rad 1 eine Kreiskontur hat, die auf der Bewegungsebene 107 entlang der Meßstrecke 99 bewegt wird (sei es geschoben oder gerollt), ist auch das zu erwartende Anwachsen der zunächst verzerrten Profilkontur bekannt. Es kann dann auch festgestellt werden, ob mit einer Aufnahme der genaue Höchstpunkt getroffen wurde oder ob unmittelbar vor und unmittelbar nach dem Höhstpunkt jeweils eine Aufnahme gemacht wurde. Im erstgenannten Fall kann das Ergebnis unmittelbar verwendet werden, im zweigenannten Fall

muß im Rechner zunächst noch eine Korrektur durchgeführt werden.

Es ist jedoch auch denkbar bei einer Ausführungsform nach Figur 14 beidseitig des Lichtstrahls 116 eine Kameraanordnung, wie in Figur 14 nur einseitig gezeichnet, zu verwenden. Während der schnell aufeinanderfolgenden Mehrfachaufnahmen im Meßbereich 108 laufen dann im Rechner zwei unterschiedliche Profilkonturen aus entgegengesetzten Richtungen aufeinander zu. Wird eine Aufnahme genau in Meßposition 100 von allen Kameras gemacht, so muß im Rechner einmal eine deckungsgleiche Kontur entstehen, weil von beiden Kamerasystemen eine identische Kontur geliefert wird. Diese Kontur entspricht dann der zu messenden Kontur. Gelingt dies jedoch nicht, so kann zwischen den Konturen, die am nächsten zusammenliegen problemlos interpoliert werden. Es ist bei dieser Ausführung zwar ein höherer apperativer Aufwand nötig, es ist jedoch bei der Software nicht mehr erforderlich, die zu erwartende Konturverschiebung in Abhängigkeit vom Durchmesser des Rades 1 und vom Zeitabstand der Bildfolge zu berücksichtigen.

Um eine ausreichend schnelle Bildfolge zu erreichen, ist es denkbar, mehrere Sätze von Kameras im Wechsel hintereinander Aufnahmen machen zu lassen oder aber bei den vorhandenen Kameras und bei Einsatz einer Lichtschnittbeleuchtung eine rasch aufeinanderfolgende Mehrfachbelichtung durchzuführen, bevor die von der Kamera erfaßten Daten ausgelesen werden in den Rechner.

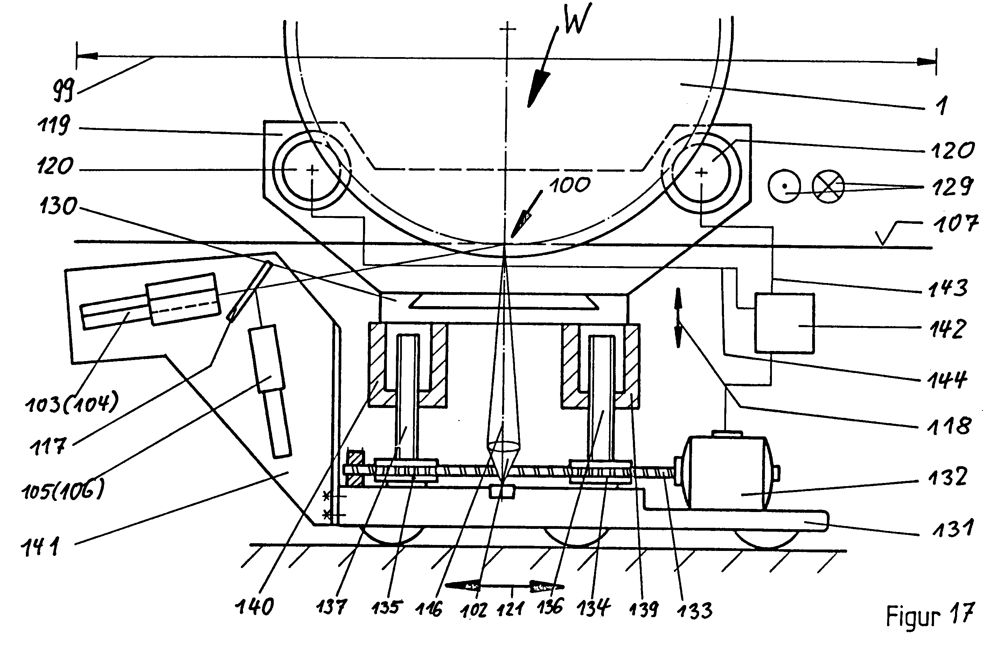

Eine alternative Möglichkeit, möglichst genau die Meßposition 100 im Augenblick der Messung zu erreichen, ist in Figur 17 dargestellt. Auch dort ist wiederum eine Meßstrecke 99 definiert, mit einer Bewegungsebene 107. Ein Rad 1 wird wieder entlang der Meßstrecke 99 bewegt. Innerhalb oder außerhalb der Meßstrecke 99 ist seitlich außen neben der Hilfsschiene 112 ein Stützrollenträger 119 vorgesehen, in dem eine Stützrollenpaar 120 drehbar gelagert ist. Der Stützrollenträger 119 und damit das Stützrollenpaar 120 ist in einem Schlitten 130 horizontal und damit senkrecht zur Zeichenebene verschiebbar, wie dies die Symbole 129 andeuten. Ein entlang der Hilfsschiene 112 beweglicher Wagen 131 trägt einen Motor 132 der eine Spindel 133 antreiben kann. Senkrecht zum Wagen 131 sind drehbar gelagert zwei Schneckenräder 134 und 135 vorgesehen, die jeweils drehfest mit Gewindespindeln 136 und 137 verbunden sind. Die Spindel 133 arbeitet mit den Schneckenrädern 135 und 134 so zusammen, daß eine Drehbewegung der Spindel 133 eine entsprechende Drehbewegung der Schneckenräder 134 und 135 erzeugt. Hierdurch werden dann auch die Gewindespindeln 136 und 137 entsprechend gedreht. Diese wiederum arbeiten zusammen mit Muttern 138 und 140, die drehfest am Schlitten 130 befestigt sind. Eine Drehbewegung der Gewindespindeln 136 und 137 hat somit eine Heb-und Senkbewegung des Schlittens 130 und damit des Stützrollenträgers 119 mit dem Stützrollenpaar 120 in Richtung des Pfeiles 118 zur Folge.

Am Wagen 131 ist ebenfalls die Beleuchtungseinrichtung 102 angeordnet, die entweder direkt oder über entsprechende Umlenkmittel die Umfangsfläche des Rades 1 vertikal von unten anleuchten kann. Am Wagen 131 ist weiter ein Träger 141 angeordnet, der die Kameras 103-106 und die Umlenkeinrichtung 117 trägt in einer Anordnung, wie sie zu Figur 14 bereits beschrieben wurde.

Zur Durchführung der gewünschten Messung mit einer Einrichtung nach Figur 17 wird im Bereich eines sich bewegenden Rades 1 der Stützrollenträger 119 auf dem Schlitten 130 gegen das Rad bewegt, solange bis das Stützrollenpaar 120 z. B. im Laufflächenbereich oder im Spurkranzbereich des Rades 1 angekommen ist. Sodann wird durch Betätigung des Motors 132 der Stützrollenträger 119 und damit das Stützrollenpaar 120 angehoben, solange bis beide Stützrollen des Stützrollenpaares 120 an der Umfangsfläche des Rades 1 in einem Umfangsbereich zur Anlage kommen. Das Erreichen dieser Position kann von einer Steuereinrichtung 142 dadurch festgestellt werden, daß über die Leitungen 143 und 144, die mit den Rollen 120 verbunden sind, über das Rad 1 z. B. ein Impuls eines Kraftsensors weitergeleitet wird. Dieser Impuls wird von der Steuereinrichtung 142 registriert, die daraufhin den Motor 132 abschaltet. Die ganze Einrichtung nach Figur 17 kann nun von dem sich bewegenden Rad 1 in Richtung des Pfeiles 121 mitgeschleppt werden. Währenddessen kann in bereits beschriebener Weise die Profilaufnahme erfolgen. Danach kann der Stützrollenträger 119 mit dem Stützrollenpaar 120 wieder etwas abgesenkt und senkrecht zur Zeichenebene der Figur 17 auf dem Schlitten 130 wieder aus dem Kontaktbereich mit dem Rad 1 ausgefahren werden. Die gesamte Einrichtung nach Figur 17 kann dann zurück in Ausgangposition gefahren werden und bei Bedarf an das nächste Rad 1 angelegt werden. Natürlich können in einer Meßstrecke 99 auch mehrere solcher Einrichtungen vorgesehen sein.

Der Meßvorgang selbst und dessen Auswertung kann in einfachster Art wie nachfolgend beschrieben durchgeführt werden.

Befindet sich ein Rad 1 in einer Meßposition 100 oder 101, so wird über die Beleuchtungseinrichtung 102 ein Lichtschnitt oder eine Lichtkante in an sich bekannter Weise am Umfang des Rades 1 erzeugt, wodurch ein von den bereits beschriebenen Halbleiterkameras erfaßbares Profil erzeugt wird. Aus Platzgründen sind die Kameras in der dargestellten Weise winklig zueinander angeordnet, wobei die Bildaufteilung durch den als Strahlteiler wirkenden, halbdurchlässigen Spiegel 117 vorgenommen wird. Alle Kameras 103-106 werden von einer gemeinsamen Synchronquelle versorgt, die einen bildpunktgenauen Gleichlauf garantiert. Es kann auch hier jede Kamera mit einem Zoom-Objektiv ausgerüstet sein, wobei dem Objektiv jeweils ein Blaufilter zur Unterdrückung des Infrarotanteils des Blitzlichtes vorgeschaltet sein kann. Die Brennweite des Objektives muß jedenfalls so sein, daß die Empfängerfläche jeder Kamera vollständig ausgefüllt ist.

Da auch hier die Signale mehrerer Kameras von nur einem Rechner verarbeitet werden sollen, ist für jede Kamera separat eine Bildsignalvorverarbeitung erforderlich. Die Verarbeitung der ankommenden Signale ist wieder so, wie bereits im Zusammenhang mit den Figuren 18 und 19 beschrieben.

Liste der verwendeten Bezugszeichen

| 1 | Rad |
|---|---|
| 2 | Schine |
| 2' | Laufebene |
| 3 | Sender |
| 4 | Empfänger |
| 5 | Achse |
| 6 | Meßebene |
| 7 | Radsatz |
| 8 | Auswerteeinrichtung |
| 9 | Zeiterfassungseinrichtung |
| 10 | Meßkreis |
| 11 | Haupttastrichtung |
| 12 | Tangente |
| 13 | Lauffläche |
| 14 | Ausgabeeinrichtung |
| 15 | Seitenführung |
| 15' | Seitenführung |
| 16 | Schiene |
| 16' | Laufebene |
| 17 | Meßebene |
| 18 | Laser |
| 19 | Empfangsoptik |
| 20 | Sendemodul |
| 20' | Sendemodul |
| 21 | Sendemodul |
| 22 | Laser |
| 23 | unbenutz |
| 24 | Radsatz |
| 25 | Rad |
| 26 | Laser |
| 26' | Laser |
| 26'' | Laser |
| 27 | Empfangsoptik |
| 28 | Empfangsoptik |
| 29 | Laser |
| 29' | Laser |
| 30 | Achse |
| 31 | Teilungseinrichtung |
| 32 | Umlenkspiegel |
| 33 | Zeiterfassungseinrichtung |
| 34 | diffus remitiertes Licht |
| 35 | Auswerteeinrichtung |
| 36 | Radsatzachse |
| 37 | Strahlenbündel |
| 38 | Erwartungsbereich |
| 39 | Empfangsoptik |
| 40 | Empfangsmodul |

| | |
|---|---|
| 41 | Empfangsmodul |
| 42 | Empfangsoptik |
| 42' | Empfangsoptik |
| 43 | Empfangsoptik |
| 44 | Pfeil Rollrichtung |
| 45-50 | Laser |
| 51-56 | Empfangsoptik |
| 57 | Meßstrecke |
| 58 | Hilfsgleis |
| 59 | Meßpositionsebene |
| 60 | Beleuchtungseinrichtung |
| 61 | planparalleles Lichtbündel |
| 62 | Kamera |
| 63 | Kamera |
| 64 | Kamera |
| 65 | Kamera |
| 66 | Bildschirm |
| 67 | Lichtquelle |
| 68 | Rollebene |
| 69 | Umlenkeinrichtung |
| 70 | Umlenkmittel |
| 71 | Meßebene |
| 72 | halbdurchlässiger Spiegel |
| 73 | Schalteinrichtung |
| 74 | unbenutzt |
| 75 | Stützrollenträger |
| 76 | Stützrollenpaar |
| 77 | Tastorgan |
| 78 | Steuereinrichtung |
| 79 | Motor |
| 80 | Gewindespindel |
| 81 | Gewindemutter |
| 82 | Pfeil |
| 83 | Trägerplatte |
| 84 | Gelenkpunkt |
| 85 | Pfeil |
| 86 | Mittelpunkt |
| 87 | Bett |
| 88 | Pfeil |
| 89 | Pfeil |
| 90 | Achse |
| 91 | Hydraulikzylinder |
| 92 | Hydraulikzylinder |
| 93 | Fundament |
| 94 | Meßkreis |
| 95 | Punkt |
| 96 | Stirnseite |
| 87 | Interface |
| 98 | unbenutzt |
| 99 | Meßstrecke |
| 100 | Meßposition |
| 101 | Meßposition |
| 102 | Beleuchtungseinrichtung |
| 103 | Kamera |
| 104 | Kamera |
| 105 | Kamera |
| 106 | Kamera |
| 107 | Bewegungsebene |

| 108 | Meßbereich |
|---|---|
| 109 | Beleuchtungsquelle |
| 110 | Beleuchtungsquelle |
| 111 | Radsatzachse |
| 112 | Hilfsschiene |
| 113 | Ausgabeeinbeit |
| 114 | Bewegungsrichtung |
| 115 | Trageinrichtung |
| 116 | Lichtstrahl |
| 117 | Unlenkeinrichtung |
| 118 | Pfeil |
| 119 | Stützrollenträger |
| 120 | Stützrollenpaar |
| 121 | Pfeil |
| 122 | Abstrahlrichtung |
| 123 | Abstrahlrichtung |
| 124 | Träger |
| 124' | Träger |
| 125 | Pfeil |
| 126 | Drehpunkt |
| 127 | Motor |
| 128 | Steuereinrichtung |
| 129 | Symbole |
| 130 | Schlitten |
| 131 | Wagen |
| 132 | Motor |
| 133 | Spindell |
| 134 | Schneckenrad |
| 135 | Schneckenrad |
| 136 | Gewindespindel |
| 137 | Gewindespindel |
| 138 | Interface |
| 139 | Mutter |
| 140 | Mutter |
| 141 | Träger |
| 142 | Steuereinrichtung |
| 143 | Leitung |
| 144 | Leitung |
| 145 | Meßkreis |
| 146 | Punkt |
| 147 | Stirnseite |
| L1 | Lichtschranke |
| L2 | Lichtschranke |
| T1-T4 | fotoelektrische Taster |
| P1-P4 | Tastpunkt |
| Y1-Y4 | Ordinatenwerte |
| X1-X4 | Abszissenwerte |
| t1-t4 | Zeitwerte |
| M | Mittelpunkte |
| C | Grundabstabd |
| d | Durchmesser |
| 1 | durchmesserabhängige Distanz |
| 1' | durchmesserabhängige Distanz |
| S | Sehnenstück |
| X | Abstand |
| U | Durchmessererfassungseinrichtung |
| V | Reinigungseinrichtung |
| W | Profilerfassungseinrichtung |

α       Winkel

α       Winkel

**Patentansprüche**

**1.** Einrichtung zur Vermessung von im Fahrzeug eingebauten Rädern von Radsätzen von Schienenfahrzeugen mit einem im Verlauf eines von einem Schienenpaar gebildeten Gleises vorgesehenen Meßbereich (X) mit Laufebenen (2', 16', 68, 107) für die Räder der Radsätze bildenden Schienen (2, 16, 58, 112), die an die Schienen des Gleises angeschlossen oder anschließbar sind, wobei innerhalb des Meßbereichs (X) mindestens eine Durchmessererfassungseinrichtung (U) angeordnet ist, dadurch gekennzeichnet, daß die die Laufebenen (2', 16', 68, 107) bildenden Schienen (2, 16, 58, 112) so angeordnet und ausgebildet sind, daß sie ein Rad in seinem seitlich äußeren Umfangsbereich abstützen können und daß weiter innerhalb des Meßbereiches (X) eine Profilerfassungseinrichtung (W) zur Erfassung des Profilverlaufs des Profils der Räder von Eisenbahnradsätzen angeordnet ist, wobei die Durchmessererfassungseinrichtung (U) und die Profilerfassungseinrichtung (W) derart ausgebildet sind, daß mit ihnen die jeweilige Erfassung während der Bewegung des zugeordneten Rades (1, 18) relativ zu diesen Einrichtungen (U,W) durchführbar ist, und wobei weiter die Profilerfassungseinrichtung eine Beleuchtungseinrichtung (102) mit optischen Mitteln zur Erzeugung eines Lichtschnitts oder einer Lichtkante an der Umfangsfläche des Rades (1) aufweist, welchletztere unterhalb einer Laufebene (107), die an zugeordneten, als Stützmittel wirkenden Schienen (112) ausgebildet ist, angeordnet ist, daß der Beleuchtungseinrichtung (102) mindestens eine Abbildungsoptik mit einer Digitalisierungseinrichtung (103-106) zur Erfassung des Profils des Lichtschnittes oder der Lichtkante zugeordnet ist, wobei die Abbildungsoptik mit der Digitalisierungseinrichtung ebenso wie die Durchmessererfassungseinrichtung (U) mit einer Auswerteeinrichtung (98) und diese mit einer Ausgabeeinheit (66) verbunden ist und wobei die Einrichtung Mittel zur Erfassung der Meßposition (100, 101) aufweist, die die Aktivierung der Einrichtung auslösen.

**2.** Einrichtung nach dem Oberbegriff des Anspruchs 1, dadurch gekennzeichnet, daß die die Laufebenen (2', 16', 68, 107) bildenden Schienen (2, 16, 58, 112) so angeordnet und ausgebildet sind, daß sie ein Rad in seinem seitlich äußeren Umfangsbereich abstützen können und daß weiter innerhalb des Meßbereiches (X) eine Profilerfassungseinrichtung (W) zur Erfassung des Profilverlaufs des Profils der Räder von Eisenbahnradsätzen angeordnet ist, wobei die Durchmessererfassungseinrichtung (U) und die Profilerfassungseinrichtung (W) derart ausgebildet sind, daß mit ihnen die jeweilige Erfassung während der Bewegung des zugeordneten Rades (1, 18) relativ zu diesen Einrichtungen (U, W) durchführbar ist, und daß die Profilerfassungseinrichtung als Stützmittel wirkende Schienen (58) zur Abstützung eines Rades an seiner Umfangsfläche, eine Beleuchtungseinrichtung (60), mit der ein planparalleles Lichtbündel (61) zur Beleuchtung des zu vermessenden Rades im Bereich des Radprofils erzeugbar ist, und durch das planparallele Lichtbündel erreichbar angeordnete Abbildungsoptiken zur Erfassung des Schattenbildes aufweist, wobei die Abbildungsoptiken mit einer Auswerteeinrichtung (98) verbunden sind.

**3.** Einrichtung nach Anspruch 1 oder 2, dadurch gekennzeichnet, daß vor der Profilierfassungseinrichtung (W) oder vor der Durchmessererfassungseinrichtung (U) eine Reinigungseinrichtung (V) zur Reinigung der Umfangsfläche eines zugeordneten Rades (1, 18) mindestens in einem Profilbereich vorgesehen ist.

**4.** Einrichtung nach einem der Ansprüche 1 bis 3, dadurch gekennzeichnet, daß die Reinigungseinrichtung (V), mindestens aber das Reinigungsgerät sich während des Reinigungsvorganges mit dem zu reinigenden Rad (1, 18) entlang des Meßbereichs (X) mitbewegt.

**5.** Einrichtung nach einem der Ansprüche 1 bis 4, dadurch gekennzeichnet, daß der Durchmessererfassungseinrichtung je Rad mindestens eine Trageinrichtung zugeordnet ist sowie eine Einrichtung mit mindestens zwei abstrahlenden elektromagnetischen Strahlenbündeln (26', 26''), die mindestens angenähert in der Ebene (17) des zu messenden Durchmessers (d) verlaufen und die in dieser Ebene (17) einen Grundabstand (C) zueinander aufweisen und in dieser Ebene und senkrecht zu sich selbst relativ zum Radsatz unter Beibehaltung ihres Grundabstandes bewegbar angeordnet sind, sowie mit mindestens einer oder einem jedem Strahlenbündel (26', 26'') zugeordneten und im zur Verfügung stehenden Freiraum angeordneten Empfangsoptik oder Empfänger (27, 28) zur Erfassung von bei tangentialer Berührung der Radumfangsfläche mit dem Strahlenbündel remittierter Strahlung (34), wobei die Empfangsoptiken oder Empfänger (27, 28) mit einer Zeiterfassungs- (33) und einer Auswerteeinrichtung (35) verbunden sind und wobei die Strahlen eine Wellenlänge von 200 bis 2000 nm aufweisen.

6. Einrichtung nach Anspruch 5, dadurch gekennzeichnet, daß die Trageinrichtung als je Rad der Radsätze eine Laufebene (2', 16', 68, 107) bildende Schiene (2, 16, 58, 112), ausgebildet ist und daß die elektromagnetischen Strahlenbündel von mindestens zwei Laser-Strahlenbündeln (26', 26") gebildet werden.

7. Einrichtung nach Anspruch 6, dadurch gekennzeichnet, daß die genannten Laser-Strahlenbündel und die zugeordneten Empfangsoptiken mehrfach, jeweils um einen Streckenbetrag versetzt zueinander, vorgesehen sind.

8. Einrichtung nach Anspruch 7, dadurch gekennzeichnet, daß der Versatz kleiner ist, als der Grundabstand (C).

9. Einrichtung nach einem der Ansprüche 5 bis 8, dadurch gekennzeichnet, daß die vorhandenen Strahlenbündel (22, 29, 29', 45-50) bekannte Abstände Sq und X untereinander aufweisen und in bekanntem Abstand Hq zur Laufebene (16') angeordnet sind, sowie mit den ihnen zugeordneten Empfangsoptiken (43, 42, 42', 51-56) von einer Ebene senkrecht zur Laufebene (2') und parallel zu einer Radsatzachse (36) in zwei Gruppen aufgeteilt werden, wobei die Laser-Strahlenbünder so verschwenkt sind, daß jedes Strahlenbündel (22; 45-47) der einen Gruppe zu jedem Strahlenbündel (29, 29'; 48-50) der anderen Gruppe divergierend verläuft.

10. Einrichtung nach Anspruch 9, dadurch gekennzeichnet, daß die genannte Ebene die Winkelhalbierende der divergierend verlaufenden Strahlenbündel bildet.

11. Einrichtung nach einem der Ansprüche 5 bis 10, dadurch gekennzeichnet, daß die Strahlenbündel (45-47; 48-50; 29, 29') einer Gruppe parallel zueinander verlaufen.

12. Einrichtung nach einem der Ansprüche 9 bis 11, dadurch gekennzeichnet, daß die einlaufseitige Gruppe aus mindestens einem Laser-Strahlenbündel (22) mit Empfangsoptik (43) und die auslaufseitige Gruppe aus mindestens zwei Laser-Strahlenbündeln (29, 29') mit Empfangsoptiken (42, 42') besteht.

13. Einrichtung nach einem der Ansprüche 5 bis 12, dadurch gekennzeichnet, daß die vorhandenen Laser zur Erzeugung der Laser-Strahlenbündel gruppenweise (20, 20') oder insgesamt (21) zu Sendemodulen (20, 20'; 21) zusammgesetzt sind.

14. Einrichtung nach einen der Ansprüche 5 bis 13, dadurch gekennzeichnet, daß mindestens jeder Laser für die Laser-Strahlenbündel (18, 22, 45-50, 29, 29') um eine Achse (30) schwenkbar und feststellbar angeordnet ist.

15. Einrichtung nach Anspruch 5, dadurch gekennzeichnet, daß Einrichtungen zum Teilen (31) und Umlenken (32) mindestens eines Strahlenbündels (37) vorgesehen sind.

16. Einrichtung nach einem der Ansprüche 5 bis 15, dadurch gekennzeichnet, daß jedes Strahlenbündel fokussiert wird, so daß die Taille des Strahlenbündels im Erwartungsbereich (38) für die Berührung mit dem Rad (25) liegt.

17. Einrichtung nach einem der Ansprüche 5 bis 16, dadurch gekennzeichnet, daß mindestens die Einrichtungen zur Erzeugung der Strahlenbündel (26', 26") und die zugehörigen Empfangsoptiken oder Empfänger (27, 28) auf einem verfahrbaren Meßwagen angeordnet sind, der mit einer Wegmeßeinrichtung zusammenarbeitet, die ihrerseits über eine Verbindung mit der Auswerteeinrichtung (35) verbunden sein kann oder verbindbar ist.

18. Einrichtung nach einem der Ansprüche 1 bis 4, dadurch gekennzeichnet, daß die Durchmessererfassungseinrichtung im Bereich einer Meßstrecke vorgesehen ist, wobei den Anfang und das Ende der Meßstrecke markierende Schalteinrichtungen (L 1, L 2) mindestens zur Erfassung der Ankunft eines Rades (1) eines Radsatzes (7) im Schaltbereich, durch je Rad (1) mindestens zwei berührungslos arbeitende Abstandstaster (T 1, T 4; T 2, T 3), sowie eine Auswerteinrichtung (8) und eine Zeiterfassungseinrichtung (9) vorgesehen sind, wobei die Abstandstaster (T 1, T 4; T 2, T 3) unterhalb einer Abstütz- oder Laufebene (2') angeordnet sind und deren definierte Tastpunkte (P 1 - P 4) alle im wesentlichen in einer gemeinsamen, dem jeweiligen Rad (1) zugeordneten Ebene (6) des zu messenden Durchmessers liegen und wobei die Schalteinrichtungen (L 1, L 2) und die Abstandstaster (T 1 - T 4) mit der Zeiterfassungseinrichtung (9) und mit der Auswerteinrichtung (8) verbunden sind.

19. Einrichtung nach Anspruch 18, dadurch gekennzeichnet, daß die Abstandstaster (T 1 - T 4) so ausgerichtet sind, daß die Tastpunkte (P 1 - P 4) zwischen dem Anfang und dem Ende der von den Schalteinrichtungen (L 1, L 2) markierten Meßstrecke liegen.

20. Einrichtung nach einem der Ansprüche 18 und 19, dadurch gekennzeichnet, daß mindestens die das Ende der Meßstrecke markierende Schalteinrichtung von einem berührungslos arbeitenden Abstandstaster (T 4) gebildet wird.

21. Einrichtung nach einem der Ansprüche 18 bis 20, dadurch gekennzeichnet, daß die berührungslos arbeitenden Taster (T 1 - T 4) um eine Achse (5) senkrecht zur Meßebene (6) schwenkbar und feststellbar angeordnet sind.

22. Einrichtung nach einem der Ansprüche 18 bis 21, dadurch gekennzeichnet, daß als Abstandstaster (T 1 - T 4) fotoelektrische Schalter zum Erkennen eines Objektes in fest eingestellter Entfernung verwendet werden.

23. Einrichtung nach einem der Ansprüche 19 bis 22, dadurch gekennzeichnet, daß die die Meßstrecke begrenzenden Schalteinrichtungen (L 1, L 2) als Lichtschranke ausgebildet sind.

24. Einrichtung nach einem der Ansprüche 18 bis 23, dadurch gekennzeichnet, daß die Abstandstaster (T 1 - T 4) die Oberfläche eines Rades im Meßkreis (10) schräg von unten antasten in einer solchen Ausrichtung, daß die Haupttastrichtung (11) etwa senkrecht zur Tangente (12) an den Meßkreis (10) im Tastpunkt (P 1 - P 4) verläuft.

25. Einrichtung nach einem der Ansprüche 1 oder 2, dadurch gekennzeichnet, daß die Abbildungsoptiken und die zugeordneten Digitalisierungseinrichtungen Bauelemente mindestens einer in der Einrichtung verwendeten elektronischen Kamera (62-65; 103-106) sind.

26. Einrichtung nach einem der Ansprüche 2 bis 24, dadurch gekennzeichnet, daß in der Profileerfassungseinrichtung je ein Eisenbahnrad (18) auf einer Seite einer Meßebene (71) im Bereich des Radprofils von einem möglichst planparallelen Lichtbündel (61) der Beleuchtungseinrichtung (60) mindestens angenähert tangential beleuchtet und das Schattenbild ausgewertet wird, wobei eine Meßstrecke (57) mit einem Hilfsgleis (58) vorgesehen ist und wobei auf einer Seite einer senkrecht zum Gleis und parallel zur Radsatzachse in Längsrichtung der Meßstrecke (57) festgelegten Meßpositionseene (59) eine Beleuchtungseinrichtung (60) zur Erzeugung des planparallelen Lichtbündels (61) und auf dessen anderer Seite mindestens eine Kamera (62-65) zur Erfassung des Schattenbildes angeordnet ist, die ihrerseits mit einer Auswerteelektronik (Figur 18) verbunden ist, wobei die Auswerteeinrichtung (98) mit einem Bildschirm (66), einem Plotter oder der Steuerung einer Werkzeugmaschine verbunden oder verbindbar ist.

27. Einrichtung nach einem der Ansprüche 2 oder 26, dadurch gekennzeichnet, daß vier Kameras (62-65) vorgesehen sind, für vier aneinander angrenzende Schattenbildabschnitte, wobei die Auswerteelektronik (Figur 18) Einrichtungen für eine parallele Vorverarbeitung und für eine Zwischenspeicherung und seriellen Verarbeitung der Signale der Kameras (62-65) enthält.

28. Einrichtung nach einem der Ansprüche 2 sowie 26 und 27, dadurch gekennzeichnet, daß jede Beleuchtungseinrichtung (60) eine Blitzlichteinrichtung enthält.

29. Einrichtung nach einem der Ansprüche 2 sowie 26 bis 28, dadurch gekennzeichnet, daß die Lichtquelle (67) jeder Beleuchtungseinrichtung (60) unterhalb einer Laufebene (68) angeordnet ist, wobei eine

EP 0 212 052 B1

Umlenkeinrichtung (69) mit Umlenkmitteln (70) für das Licht an der Beleuchtungseinrichtung (60) überrollbar angeordnet ist.

30. Einrichtung nach einem der Ansprüche 2 sowie 26 bis 29, dadurch gekennzeichnet, daß die Beleuchtungseinrichtung (60) so gestaltet und angeordnet ist, daß die Meßebene (71) einen spitzen Winkel (α) mit der Meßpositionsebene (59) bildet.

31. Einrichtung nach einem der Ansprüche 2 sowie 26 bis 30, dadurch gekennzeichnet, daß die Kamera oder die Kameras (62-65) stationär unterhalb der Rollebene (68) angeordnet sind.

32. Einrichtung nach einem der Ansprüche 2 sowie 26 bis 31, dadurch gekennzeichnet, daß zwei Gruppen (64, 65; 62, 63) von Kameras (62-65) vorgesehen sind, von denen die eine (62, 63) in Richtung des Lichtbündels (61) und die andere (64, 65) winklig dazu ausgerichtet ist und wobei für die winklig ausgerichtetet Gruppe (64, 65) ein halbdurchlässiger Spiegel (72) (Strahlenteiler) im Lichtbündel (61) vorgesehen ist.

33. Einrichtung nach einem der Ansprüche 2 sowie 26 bis 32, dadurch gekennzeichnet, daß als Kameras (62-65) sog. CCD-Kameras vorgesehen sind.

34. Einrichtung nach einem der Ansprüche 2 sowie 26 bis 33, dadurch gekennzeichnet, daß eine von einem Rad (18) betätigte Schalteinrichtung (73) vorgesehen ist, die die Einrichtung spätestens dann, wenn ein Rad die Meßposition erreicht hat, aktiviert.

35. Einrichtung nach einem der Ansprüche 2 sowie 26 bis 34, dadurch gekennzeichnet, daß jede Beleuchtungseinrichtung (60) so angeordnet ist, daß sie dem ankommenden Rad (18) entgegenleuchtet.

36. Einrichtung nach einem der Ansprüche 2 sowie 26 bis 35, dadurch gekennzeichnet, daß jede Beleuchtungseinrichtung (60) so angeordnet ist, daß sie dem ankommenden Rad nachleuchtet.

37. Einrichtung nach einem der Ansprüche 2 sowie 26 bis 28 und 32 bis 35, dadurch gekennzeichnet, daß außerhalb des planparallelen Lichtbündels (61) zwischen Kamera (62-65) und Beleuchtungseinrichtung (60) jeder Meßstrecke (57) ein vertikal zu diesem bewegliches, in einem Stützrollenträger (75) drehbar gelagertes Stützrollenpaar (76) zum drehbaren Abstützen jeden Rades (18) vorgesehen ist.

38. Einrichtung nach Anspruch 37, dadurch gekennzeichnet, daß Kamera bzw. Kameras (62-65) und Beleuchtungseinrichtung (60) am Stützrollenträger (75) angeordnet sind.

39. Einrichtung nach Anspruch 38, dadurch gekennzeichnet, daß Kamera bzw. Kameras (62-65) und Beleuchtungseinrichtung (60) relativ zum Stützrollenträger (75) mindestens vertikal beweglich und einstellbar sind.

40. Einrichtung nach Anspruch 39, dadurch gekennzeichnet, daß etwa mittig zwischen den Stützrollen (76) ein Prüf- oder Tastorgan (77) zur Ermittlung des Durchhanges des Rades (18) vorgesehen ist.

41. Einrichtung nach Anspruch 40, dadurch gekennzeichnet, daß das Prüf-oder Tastorgan (77) mit einer Stelleinrichtung (78, 79, 80, 81) zur Einstellung der Lage der Kamera bzw. Kameras (62-65) und der Beleuchtungseinrichtung (60) auf den Durchhang des Rades (18) verbunden ist.

42. Einrichtung nach einem der Ansprüche 37 bis 41, dadurch gekennzeichnet, daß jeder Stützrollenträger (75) mit Stützrollenpaar (76) in Schienenlängsrichtung (82) beweglich angeordnet ist und mindestens ein einem Rad (18) eines Radsatzes zugeordneter Stützrollenträger (75) eine Einrichtung (77) aufweist, zur Erfassung der Anhebeposition des Rades (18) und damit des Radsatzes.

43. Einrichtung nach Anspruch 1, dadurch gekennzeichnet, daß die Beleuchtungseinrichtung (102) so angeordnet und ausgebildet ist, daß sie das Profil des Rades (1) unter einem spitzen Winkel zu einer Bewegungsrichtung (114) anleuchtet (Figur 15).

21

**44.** Einrichtung nach Anspruch 43, dadurch gekennzeichnet, daß Beleuchtungseinrichtung (102) mit mindestens zugeordneter Abbildungsoptik verstellbar auf einer Trageinrichtung (115) angeordnet sind, wobei Abbildungsoptik und Digitalisierungseinrichtung je Elemente einer elektronischen Kamera (103-106) sein können.

**45.** Einrichtung nach Anspruch 1, dadurch gekennzeichnet, daß Mittel vorgesehen sind, die den das Profil beleuchtenden Lichtstrahl (116) vertikal zur Laufebene (107) und von unten gegen das Profil führen.

**46.** Einrichtung nach Anspruch 45, dadurch gekennzeichnet, daß unterhalb der Laufebene (107) für jedes Rad (1) eine Beleuchtungseinrichtung (102) zur Erzeugung eines Lichtschnittes mit vertikal gegen das Profil gerichtetem Lichtstrahl (116) vorgesehen ist, wobei in Richtung der Relativbewegung (114) des Rades (1) mit der Einrichtung beiderseits des Lichtstrahls (116) mindestens eine Kamera (103-106) zur Erfassung des Profils vorgesehen ist.

**47.** Einrichtung nach einem der Ansprüche 1 sowie 43 bis 46, dadurch gekennzeichnet, daß mehrere Kameras (103, 104; 105, 106) je zu einer Kameragruppe zusammengefaßt sind, von denen mindestens eine Gruppe (103, 104) direkt auf den Lichtschnitt oder die Lichtkante und mindestens eine weitere Gruppe (105, 106) über eine Umlenkeinrichtung (117) auf den Lichtschnitt oder die Lichtkante gerichtet ist.

**48.** Einrichtung nach einem der Ansprüche 1 sowie 43 bis 47, dadurch gekennzeichnet, daß alle Kameras (103-106) stationär unterhalb der Bewegungsebene (107) angeordnet sind.

**49.** Einrichtung nach einem der Ansprüche 1 sowie 43 bis 48, dadurch gekennzeichnet, daß Kameras (103-106) und Beleuchtungseinrichtung (102) jeder Meßstrecke (99) an einer Einrichtung mit einem mindestens verikal beweglichen (118), in einem Stützrollenträger (119) drehbar gelagerten Stützrollenpaar (120) zum drehbaren Abstützen jedes Rades vorgesehen ist.

**50.** Einrichtung nach einem der Ansprüche 1 sowie 43 bis 49, dadurch gekennzeichnet, daß jeder Stützrollenträger (119) mit Stützrollenpaar (120) in Schienenlängsrichtung (121) beweglich und relativ zum zu messenden Rad zentrierbar angeordnet ist.

**51.** Einrichtung nach einem der Ansprüche 1 sowie 43 bis 50, dadurch gekennzeichnet, daß zwei Beleuchtungsquellen (109, 110) vorgesehen sind, die in Richtung der Radsatzachse (111) versetzt und synchronisiert sind.

**52.** Einrichtung nach einem der Ansprüche 1 sowie 43 bis 51, dadurch gekennzeichnet, daß mehrere Kameras (103-106) vorgesehen sind, von denen jede einen anderen Profilabschnitt aufnimmt, wobei die mit den Kameras (103-106) verbundene Auswerteelektronik (Figur 18) Einrichtungen (97) für eine Zwischenspeicherung und seriellen Verarbeitung der Signale der Kameras (103-106) enthält.

**53.** Einrichtung nach einem der Ansprüche 1 sowie 43 bis 52, dadurch gekennzeichnet, daß der Winkel ($\alpha$, $\beta$) zwischen der Beleuchtungsrichtung (116) und der aufgenommenen Abstrahlrichtung (122, 123) kleiner als 90° (Figur 2) und nicht kleiner als 60° (Figur 14) ist.

**54.** Einrichtung nach einem der Ansprüche 1 sowie 43 bis 53, dadurch gekennzeichnet, daß Kameras (103-106) und Beleuchtungseinrichtung (102) in Abhängigkeit vom Durchmesser des zu messenden Rades (1) beweglich und einstellbar am Träger (124) angordnet sind (Figur 15).

**55.** Einrichtung nach einem der Ansprüche 1 sowie 43 bis 54, dadurch gekennzeichnet, daß das abgestrahlte Licht über bilderhaltende Lichtleitfasern den Kameras (103-106) zugeleitet wird.

## Claims

**1.** Apparatus for the measurement of fitted vehicular wheels of wheelsets of rail vehicles having a measuring zone (X) provided within the course of a track formed by a pair of rails and with rails (2, 16, 58, 112) defining running planes (2', 16', 68, 107) for the wheels of the wheelsets and which are annexed to or can be annexed to the track rails, wherein at least one diameter sensing device (U) is arranged within the measuring zone (X), characterised in that the rails (2, 16, 58, 112) forming the running planes (2', 16', 68, 107) are so arranged and constructed that they can support a wheel in its laterally outer peripheral region and in that additionally within the measuring zone (X) is arranged a profile sensing device (W) for detecting the contour of the profile of the wheels of railroad wheelsets, wherein the diameter sensing device (U) and the profile sensing device (W) are constructed such that by means thereof the respective sensing operations can be carried out during the movement of the associated wheel (1, 18) relative to these devices (U, W), and wherein additionally the profile sensing device comprises an illuminating device (102) with optical means for producing an area or a line of light on the peripheral surface of the wheel (1), which latter is arranged below a running plane (107) which is defined by associated rails (112) acting as support means, and in that the illuminating device (102) is associated with at least one image-forming optical means with a digitising device (103 - 106) for sensing the profile of the light area or the light line, wherein the image-forming optical means is connected to the digitising device just as the diameter sensing device (U) is connected to an evaluation device (98) and this is connected to an output unit (66), and wherein the apparatus includes means for sensing the measuring position (100,101) which triggers the activation of the apparatus.

2. Apparatus according to the preamble of claim 1, characterised in that the rails (2, 16, 58, 112) forming the running planes (2', 16', 68, 107) are so arranged and constructed that they can support the lateral outer peripheral region of a wheel and that furthermore, within the measuring zone (X), there is arranged a profile sensing device (W) for sensing the profile contour of the profile of the wheels of railroad wheelsets, wherein the diameter sensing device (U) and the profile sensing device (W) are constructed such that by means thereof the respective sensing operations can be carried out during the movement of the associated wheel (1, 18) relative to these devices (U, W), and that the profile sensing device comprises rails (58) acting as support means for supporting a wheel at its peripheral surface, an illuminating device (60) by means of which plane parallel light beams (61) for illuminating the wheel to be measured in the region of the wheel profile can be produced and image-forming optical means arranged to be attainable by plane parallel light beams for sensing the shadow image, wherein the image-forming optical means are connected to an evaluation device (98).

3. Apparatus according to claim 1 or 2, characterised in that in advance of the profile sensing device (W) or in advance of the diameter sensing device (U) there is provided a cleaning device (V) for cleaning the circumferential surface of an associated wheel (1, 18) at least in a profile region thereof.

4. Apparatus according to one of claims 1 to 3, characterised in that the cleaning device (V), at least the cleaning instrument, moves along the measuring zone (X) with the wheel (1, 18) to be cleaned during the cleaning process.

5. Apparatus according to one of claims 1 to 4, characterised in that the diameter sensing device is associated for each wheel with at least one carrier device, and a device is provided having at least two radiating electromagnetic beams of radiation (26', 26''), which are directed at least approximately in the plane (17) of the diameter (d) to be measured and which have a basic spacing (C) from each other in this plane (17), and in this plane and perpendicular thereto are arranged to be movable relative to the wheelset while maintaining their basic spacing, and receiving optics or receivers (27,28) being provided associated with at least one or each radiation beam (26', 26'') and arranged in the available free space for sensing radiation (34) sent back from tangential contact with the peripheral surface of the wheel by the radiation beam, wherein the receiving optics or receivers (27, 28) are connected to a time sensing device (33) and an evaluation device (35) and wherein the beams have a wavelength of 200 to 2000 nm.

6. Apparatus according to claim 5, characterised in that the carrier device is constructed as rails (2, 16, 58, 112) forming a running plane (2', 16', 68, 107) for each wheel of the wheelset and that the electromagnetic radiation beams are formed by at least two laser beams (26', 26'').

7. Apparatus according to claim 6, characterised in that a plurality of said laser beams and the associated receiving optics are provided, each offset relative to one another by one course.

8. Apparatus according to claim 7, characterised in that the offset is smaller than the basic spacing (C).

**9.** Apparatus according to one of claims 5 to 8, characterised in that the radiation beams (22, 29, 29', 45-50) have known spacings Sq and X relative to each other and are arranged at a known spacing Hq relative to the running plane (16'), and together with their associated receiving optics (43, 42, 42', 51-56) are divided into two groups by a plane perpendicular to the running plane (2') and parallel to a wheelset axis (36), wherein the laser beams are so displaced that each radiation beam (22; 45-47) of the one group diverges relative to each radiation beam (29, 29'; 48-50) of the other group.

**10.** Apparatus according to claim 9, characterised in that the said plane halves the angle between the diverging radiation beams.

**11.** Apparatus according to one of claims 5 to 10, characterised in that the radiation beams (45-47; 48-50; 29, 29') of a group extend parallel to each other.

**12.** Apparatus according to one of claims 9 to 11, characterised in that the input-side group consists of at least one laser beam (22) with receiving optics (43) and the output-side group consists of at least two laser beams (29, 29') with receiving optics (42, 42').

**13.** Apparatus according to one of claims 5 to 12, characterised in that the lasers provided for producing the laser beams are combined in groups (20, 20') or as a whole (21) into emitter modules (20, 20'; 21).

**14.** Apparatus according to one of claims 5 to 13, characterised in that at least each laser for the laser beams (18, 22, 45-50, 29, 29') is arranged to be pivotable and adjustable about an axis (30).

**15.** Apparatus according to claim 5, characterised in that devices are provided for the splitting (31) and reversal (32) of at least one radiation beam (37).

**16.** Apparatus according to one of claims 5 to 15, characterised in that each radiation beam is focussed so that the waist of the radiation beam lies in the expected region (38) for the contact with the wheel (25).

**17.** Apparatus according to one of claims 5 to 16, characterised in that at least the devices for producing the radiation beams (26', 26'') and the associated receiving optics or receivers (27, 28) are arranged on a displaceable measuring carriage which cooperates with a displacement measuring device which for its part is connected or is connectable by means of a coupling to the evaluation device (35).

**18.** Apparatus according to one of claims 1 to 4, characterised in that the diameter sensing device is provided in the region of a measuring section, wherein trip devices (L1, L2) marking the beginning and the end of the measuring section are arranged at least for the sensing of the arrival of a wheel (1) of a wheelset (7) in the tripping zone, with for each wheel (1) there being provided at least two contactless gap sensors (T1, T4; T2, T3), as well an evaluation device (8) and a time sensing device (9), wherein the gap sensors (T1, T4; T2, T3) are arranged below a support or running plane (2') and their definable sensing points (P1-P4) all lie substantially in a common plane (6) of the diameter to be measured associated with the respective wheel (1), and wherein the trip devices (L1, L2) and the gap sensors (T1-T4) are connected to the time sensing device (9) and to the evaluation device (8).

**19.** Apparatus according to claim 18, characterised in that the gap sensors (T1-T4) are so orientated that the sensing points (P1-P4) lie between the beginning and the end of the measuring section marked by the trip devices (L1, L2).

**20.** Apparatus according to one of claims 18 and 19, characterised in that at least the trip device marking the end of the measuring section is formed by a contactless gap sensor (T4).

**21.** Apparatus according to one of claims 18 to 20, characterised in that the contactless sensors (T1-T4) are arranged to be pivotable and adjustable about an axis (5) perpendicular to the measuring plane (6).

**22.** Apparatus according to one of claims 18 to 21, characterised in that photoelectric switches for recognising an object at a fixed remote distance are used as gap sensors (T1-T4).

**23.** Apparatus according to one of claims 19 to 22, characterised in that the trip devices (L1, L2) which

EP 0 212 052 B1

define the measuring section are formed as photoelectric beams.

24. Apparatus according to one of claims 18 to 23, characterised in that the gap sensors (T1-T4) detect the surface of a wheel in the measuring circle (10) at an angle from below in such a direction that the main sensing direction (11) extends approximately perpendicular to the tangent (12) to the measuring circle (10) at the sensing point (P1-P4).

25. Apparatus according to one of claims 1 or 2, characterised in that the image-forming optical means and the associated digitising devices are components at least of one electronic camera (62-65; 103-106) used in the apparatus.

26. Apparatus according to one of claims 2 to 24, characterised in that in the profile sensing device each individual railroad wheel (18) is illuminated at least approximately tangentially on one side of a measuring plane (71) in the region of the wheel profile by a light beam (61) from the illuminating device (60) which is plane parallel as far as possible and the shadow image is evaluated, wherein a measuring section (57) is provided with an auxiliary track (58) and wherein on one side of a measuring position plane (59) which is perpendicular to said track and parallel to the wheelset axis in the longitudinal direction of the measuring section (57) there is arranged an illuminating device (60) for producing the plane parallel light beam (61) and on its other side is arranged at least one camera (62-65) for detecting the shadow image, said least one camera being connected to an electronic evaluation means (Figure 18), wherein the evaluation device (98) is connected to or is connectable to an image screen (66), a plotter or the control for a machine tool.

27. Apparatus according to one of claims 2 or 26, characterised in that four cameras (62-65) are provided for four individual adjacent shadow image sections, wherein the electronic evaluation means (Fig. 18) includes devices for a parallel pre-processing and for an intermediate storage and serial processing of the signals of the cameras (62-65).

28. Apparatus according to one of claims 2 and 26 and 27, characterised in that each illuminating device (60) includes a flash light device.

29. Apparatus according to one of claims 2 and 26 to 28, characterised in that the light source (67) for each illuminating device (60) is arranged below a running plane (68), wherein a reversing device (69) with reversing means (70) for the light is arranged so that it can be placed over the illuminating device (60).

30. Apparatus according to one of claims 2 and 26 to 29, characterised in that the illuminating device (60) is so shaped and arranged that the measuring plane (71) forms an acute angle ($\alpha$) with the measuring position plane (59).

31. Apparatus according to one of claims 2 and 26 to 30, characterised in that the camera or the cameras (62-65) are arranged stationary below the rolling plane (68).

32. Apparatus according to one of claims 2 and 26 to 31, characterised in that two groups (64, 65; 62, 63) of cameras (62-65) are provided, of which the one group (62, 63) is orientated in the direction of the light beam (61) and the other group (64, 65) is orientated at an angle thereto, and wherein for the group (64, 65) orientated at said angle there is provided a semi-transparent mirror (72) (beam splitter) in the light beam (61).

33. Apparatus according to one of claims 2 and 26 to 32, characterised in that so-called CCD cameras are provided as the cameras (62-65).

34. Apparatus according to one of claims 2 and 26 to 33, characterised in that a trip device (73) is provided activated by a wheel (18), said trip device activating the apparatus at the latest when a wheel has reached the measuring position.

35. Apparatus according to one of claims 2 and 26 to 34, characterised in that each illuminating device (60) is so arranged that it illuminates the oncoming wheel (18) in the direction opposing the rotation.

25

**36.** Apparatus according to one of claims 2 and 26 to 35, characterised in that each illuminating device (60) is so arranged that it illuminates the oncoming wheel after it had passed.

**37.** Apparatus according to one of claims 2 and 26 to 28 and 32 to 35, characterised in that outside the plane parallel light beam (61) between camera (62-65) and illuminating device (60) each measuring section (57) is provided with a pair of support rollers (76) rotatably mounted in a support roller carrier (75) and movable vertically relative to said section for the rotatable supporting of each wheel (18).

**38.** Apparatus according to claim 37, characterised in that camera or cameras (62-65) and illuminating device (60) are arranged on the support roller carrier (75).

**39.** Apparatus according to claim 38, characterised in that camera or cameras (62-65) and illuminating device (60) are movable at least vertically and are adjustable relative to the support roller carrier (75).

**40.** Apparatus according to claim 39, characterised in that approximately midway between the support rollers (76) there is provided a testing or sensing member (77) for detecting the sag of the wheel (18).

**41.** Apparatus according to claim 40, characterised in that the testing or sensing member (77) is connected to a setting device (78, 79, 80, 81) for setting the position of the camera or cameras (62-65) and the illuminating device (60) to account for the sag of the wheel (18).

**42.** Apparatus according to one of claims 37 to 41, characterised in that each support roller carrier (75) has the pair of support rollers (76) movable in the longitudinal rail direction (82) and at least one support roller carrier (75) associated with a wheel (18) of a wheelset includes a device (77) for detecting the lift-off position of the wheel (18) and consequently of the wheelset.

**43.** Apparatus according to claim 1, characterised in that the illuminating device (102) is so arranged and constructed that it illuminates the profile of the wheel (1) at an acute angle to a direction of movement (114) (Figure 15).

**44.** Apparatus according to claim 43, characterised in that illuminating devices (102) with at least associated image-forming optical means are arranged adjustably on a carrier device (115), wherein image-forming optical means and digitising device can each be components of an electronic camera (103-106).

**45.** Apparatus according to claim 1, characterised in that means are provided which direct the light beam (116) illuminating the profile vertically towards the running plane (107) and towards the profile from below.

**46.** Apparatus according to claim 45, characterised in that below the running plane (107) for each wheel (1) is provided an illuminating device (102) for producing a light section with light beam (116) directed vertically towards the profile, wherein at least one camera (103-106) for detecting the profile is provided in the direction of the relative movement (114) of the wheel (1) with the device on both sides of the light beam (116).

**47.** Apparatus according to one of claims 1 and 43 to 46, characterised in that a plurality of cameras (103, 104; 105, 106) are combined together to form a camera group, of which at least one group (103, 104) is aligned directly with the light section or the light edge and at least one further group (105, 106) is directed by way of a reversing device (117) to the light section or the light edge.

**48.** Apparatus according to one of claims 1 and 43 to 47, characterised in that all cameras (103-106) are arranged stationary below the movement plane (107).

**49.** Apparatus according to one of claims 1 and 43 to 48, characterised in that cameras (103-106) and illuminating device (102) for each measuring section (99) are provided on a device with a pair of support rollers (120) which are at least vertically movable (118) and are rotatably mounted on a support roller carrier (119) for the rotatable supporting of each wheel.

**50.** Apparatus according to one of claims 1 and 43 to 49, characterised in that each support roller carrier (119) has the pair of support rollers (120) movable in the longitudinal rail direction (121) and arranged to be centred relative to the wheel to be measured.

**51.** Apparatus according to one of claims 1 and 43 to 50, characterised in that two sources of illumination (109, 110) are provided which are arranged offset in the direction of the wheelset axis (111) and which are synchronised.

**52.** Apparatus according to one of claims 1 and 43 to 51, characterised in that a plurality of cameras (103-106) are provided, of which each receives a different profile section, wherein the electronic evaluation means (18) connected to the cameras (103-106) includes devices (97) for an intermediate storage and serial processing of the signals of the cameras (103-106).

**53.** Apparatus according to one of claims 1 and 43 to 52, characterised in that the angle ($\alpha$, $\beta$) between the illuminating device (116) and the received radiation direction (122, 123) is less than 90° (Figure 2) and not less than 60° (Figure 14).

**54.** Apparatus according to one of claims 1 and 43 to 53, characterised in that cameras (103-106) and illuminating device (102) are movable in dependence upon the diameter of the wheel (1) to be measured and are arranged to be adjustable on the carrier (124) (Figure 15).

**55.** Apparatus according to one of claims 1 and 43 to 54, characterised in that the radiant light is conducted to the cameras (103-106) through image-maintaining optical fibres.

**Revendications**

**1.** Dispositif pour la mesure de roues de trains de roues de véhicules sur rails, intégrées dans un véhicule, comportant une zone de mesure (X) prévue dans le tracé d'une voie constituée par deux rails, et comportant des rails (2, 16, 58, 112) définissant des plans de circulation (2', 16', 68, 107) pour les roues des trains de roues et qui sont ou peuvent être raccordés aux rails de la voie, étant précisé qu'au moins un dispositif de détection de diamètre est installé à l'intérieur de la zone de mesure (X), caractérisé en ce que les rails (2, 16, 58, 112) formant les plans de circulation (2', 16', 68, 107) sont disposés et conçus de telle sorte qu'ils puissent supporter une roue dans sa périphérie extérieure latérale, en ce qu'un dispositif de détection de profil (W), destiné à la détection de l'évolution du profil des roues de trains de roues de véhicules sur rails, est par ailleurs installé à l'intérieur de la zone de mesure (X), étant précisé que le dispositif de détection de diamètre (U) et le dispositif de détection de profil (W) sont conçus de telle sorte que par leur intermédiaire les détections respectives puissent être effectuées pendant le déplacement de la roue associée (1, 18) par rapport à ces dispositifs (U, W), et étant précisé que le dispositif de détection de profil comporte en outre un dispositif d'éclairement (102) pourvu de moyens optiques pour produire un trait lumineux ou une ligne lumineuse à la surface périphérique de la roue (1), ce dernier étant installé au-dessous d'un plan de circulation (107) formé au niveau de rails (112) agissant comme moyens de soutien associés, et en ce qu'au dispositif d'éclairement (102) se trouve associé au moins un système optique de production d'images comportant un dispositif de numérisation (103-106) pour détecter le profil du trait lumineux ou de la ligne lumineuse, étant précisé que le système optique de production d'images muni du dispositif de numérisation, de même que le dispositif de détection de diamètre (U), sont reliés à un sortie (66), et que le dispositif comporte des moyens pour détecter la position de mesure (100, 101) qui déclenchent l'activation du dispositif.

**2.** Dispositif selon le préambule de la revendication 1, caractérisé en ce que les rails (2, 16, 58, 112) formant les plans de circulation (2', 16', 58, 107) sont disposés et conçus de telle sorte qu'ils puissent supporter une roue dans sa périphérie extérieure latérale, et en ce qu un dispositif de détection de profil (W), destiné à la détection de l'évolution du profil des roues de trains de roues de véhicules sur rails, est par ailleurs installé à l'intérieur de la zone de mesure (X), étant précisé que le dispositif de détection de diamètre (U) et le dispositif de détection de profit (W) sont conçus de telle sorte que par leur intermédiaire les détections respectives puissent être effectuées pendant le déplacement de la roue associée (1, 18) par rapport à ces dispositifs (U, W), et en ce que le dispositif de détection de profit comporte des rails (58) agissant comme moyens de soutien pour supporter une roue au niveau de sa surface périphérique, un dispositif d'éclairement (60) avec lequel un faisceau lumineux plan parallèle (51) peut être produit pour éclairer la roue à mesurer dans la zone du profit de roue, et des systèmes optiques de formation d'images disposés de manière à pouvoir être atteints par le faisceau lumineux plan parallèle en vue de la détection de l'image projetée, étant précisé que les systèmes optiques de formation d'images sont reliés à un dispositif d'évaluation (98).

3. Dispositif selon la revendication 1 ou la revendication 2, caractérisé en ce qu'il est prévu, en amont du dispositif de détection de profit (W) ou en amont du dispositif de détection de diamètre (U), un dispositif de nettoyage (V) pour nettoyer la surface périphérique d'une roue associée (1,18) au moins dans une zone de profil.

4. Dispositif selon l'une quelconque des revendications 1 à 3, caractérisé en ce que le dispositif de nettoyage (V), ou au moins l'appareil de nettoyage, se déplace conjointement à la roue (1, 18) à nettoyer, le long de la zone de mesure (X), pendant l'opération de nettoyage.

5. Dispositif selon l'une quelconque des revendications 1 à 4, caractérisé en ce qu'au dispositif de détection de diamètre sont associés, pour chaque roue, au moins un dispositif support, ainsi qu'un dispositif produisant au moins deux faisceaux de rayonnement électromagnétique (26', 26") qui se propagent et s'étendent au moins approximativement dans le plan (17) du diamètre (d) à mesurer, qui présentent l'un par rapport à l'autre un espacement de base (C) dans ce plan (17), et qui sont disposés de manière à être déplaçables dans ce plan et perpendiculairement à eux-mêmes par rapport au train de roues tout en conservant entre eux leur espacement de base, ainsi qu'au moins un système optique de réception ou récepteur (27, 28) associé à chaque faisceau de rayonnement (26', 26") et situé dans l'espace libre disponible, pour détecter un rayonnement (34) réfléchi lors du contact tangentiel du faisceau de rayonnement avec la surface périphérique de la roue, étant précisé que les systèmes optiques de réception ou récepteurs (27,28) sont reliés à un dispositif d'enregistrement de temps (33) et à un dispositif d'évaluation (35), et que les rayonnements ont une longueur d'onde de 200 à 2.000 nm.

6. Dispositif selon la revendication 5, caractérisé en ce que le dispositif support est réalisé sous forme d'un rail (2, 16, 58, 112) formant un plan de circulation (2', 16', 68, 107) pour chaque roue des trains de roues, et en ce que les faisceaux de rayonnement électromagnétique sont formés par au moins deux faisceaux de rayonnement laser (26', 26").

7. Dispositif selon la revendication 6, caractérisé en ce que lesdits faisceaux de rayonnement laser et les systèmes optiques de réception associés sont prévus de manière répétée en étant décalés les uns par rapport aux autres respectivement d'une distance correspondant à la longueur d'un tronçon de voie.

8. Dispositif selon la revendication 7, caractérisé en ce que le décalage est inférieur à l'espacement de base (C).

9. Dispositif selon l'une quelconque des revendications 5 à 8, caractérisé en ce que les faisceaux de rayonnement présents (22, 29, 29', 45-50) sont situés à des distances connues Sq et X les uns des autres et disposés à une distance connue Hq du plan de circulation (16'), tout en étant subdivisés en deux groupes, tout comme les systèmes optiques de réception (43, 42, 42', 51-56) qui leur sont associés, par un plan perpendiculaire au plan de circulation (2') et parallèle à un axe de train de roues (36), les faisceaux de rayonnement laser étant orientés de telle sorte que chaque faisceau de rayonnement (22 ; 45-47) du premier groupe s'étende en divergeant par rapport à chaque faisceau de rayonnement (29, 29' ; 48-50) du second groupe.

10. Dispositif selon la revendication 9, caractérisé en ce que ledit plan forme le plan bissecteur des faisceaux de rayonnement divergents.

11. Dispositif selon l'une quelconque des revendications 5 à 10, caractérisé en ce que les faisceaux de rayonnement (45-47 ; 48-50 ; 29, 29') d'un groupe sont parallèles entre eux.

12. Dispositif selon l'une quelconque des revendications 9 à 11, caractérisé en ce que le groupe situé côté entrée est constitué par au moins un faisceau de rayonnement laser (22) associé à un système optique

28

de réception (43), et en ce que le groupe situé côté sortie est constitué par au moins deux faisceaux laser (29, 29') associés à des systèmes optiques de réception (42, 42').

13. Dispositif selon l'une quelconque des revendications 5 à 12, caractérisé en ce que les lasers présents pour produire les faisceaux de rayonnement laser sont réunis en groupes (20, 20') ou tous ensemble (21) pour former des modules d'émission (20,20' ; 21).

14. Dispositif selon l'une quelconque des revendications 5 à 13, caractérisé en ce qu'au moins chacun des lasers émettant les faisceaux de rayonnement laser (18, 22, 45-50, 29, 29') est disposé de façon à pouvoir pivoter autour d'un axe (30) et à être immobilisé.

15. Dispositif selon la revendication 5, caractérisé en ce que des dispositifs sont prévus pour fractionner (31) et dévier (32) au moins un faisceau de rayonnement (37).

16. Dispositif selon l'une quelconque des revendications 5 à 15, caractérisé en ce que chaque faisceau de rayonnement est focalisé de telle sorte que la taille du faisceau de rayonnement laser soit située dans la zone (38) dans laquelle le contact avec la roue (25) est supposé avoir lieu.

17. Dispositif selon l'une quelconque des revendications 5 à 16, caractérisé en ce qu'au moins les dispositifs pour produire les faisceaux de rayonnement (26', 26") et les systèmes optiques de réception ou récepteurs associés (27, 28) sont disposés sur un chariot de mesure mobile coopérant avec un dispositif de mesure de trajet qui, pour sa part, est ou peut être connecté au dispositif d'évaluation (35), par l'intermédiaire d'une liaison.

18. Dispositif selon l'une quelconque des revendications 1 à 4, caractérisé en ce que le dispositif de détection de diamètre est prévu dans la zone d'une section de mesure, étant précisé que des dispositifs de commutation (L1, L2) repérant le début et la fin de la section de mesure pour au moins détecter l'arrivée d'une roue (1) d'un train de roues (7) dans la zone de commutation à l'aide, pour chaque roue, d'au moins deux capteurs de distance (T1, T4 ; T2, T3) agissant sans contact, ainsi qu'un dispositif d'évaluation (8) et un dispositif d'enregistrement de temps (9) sont prévus, les capteurs de distance (T1, T4 ; T2, T3) étant disposés au-dessous d'un plan de soutien ou de circulation (2'), tandis que leurs points définis d'exploration (P1-P4) sont tous situés sensiblement dans un plan commun (6) associé à la roue respective (1) dont le diamètre est à mesurer, les dispositifs de commutation (L1, L2) et les capteurs de distance (T1-T4) étant reliés au dispositif d'enregistrement de temps (9) et au dispositif d'évaluation (8).

19. Dispositif selon la revendication 18, caractérisé en ce que les capteurs de distance (T1-T4) sont orientés de telle sorte que les points d'exploration (P1-P4) soient situés entre le début et la fin de la section de mesure repérée par les dispositifs de commutation (L1, L2).

20. Dispositif selon l'une quelconque des revendications 18 et 19, caractérisé en ce qu au moins le dispositif de commutation repérant la fin de la section de mesure est constitué par un capteur de distance (T4) agissant sans contact.

21. Dispositif selon l'une quelconque des revendications 18 à 20, caractérisé en ce que les capteurs (T1-T4) agissant sans contact sont montés de façon à pouvoir pivoter autour d'un axe (5) perpendiculaire au plan de mesure (6) et à être immobilisés.

22. Dispositif selon l'une quelconque des revendications 18 à 21, caractérisé en ce que des interrupteurs photo-électriques permettant l'identification d'un objet à une distance réglée de façon fixe sont utilisés comme capteurs de distance (T1-T4).

23. Dispositif selon l'une quelconque des revendications 19 à 22, caractérisé en ce que les dispositifs de commutation (L1, L2) limitant la section de mesure sont réalisés sous la forme de relais photo-électriques.

24. Dispositif selon l'une quelconque des revendications 18 à 23, caractérisé en ce que les capteurs de distance (T1-T4) explorent obliquement à partir du bas la surface d'une roue située dans le cercle de mesure (10), selon une orientation telle que la direction principale d'exploration (11) est approximativement perpendiculaire à la tangente (12) au cercle de mesure (10) au niveau du point d'exploration (P1-P4).

**25.** Dispositif selon l'une des revendications 1 ou 2, caractérisé en ce que les systèmes optiques de formation d'images et les dispositifs de numérisation associés sont des composants d'au moins un appareil électronique de prise de vues (62-65 ; 103-106) utilisé dans le dispositif.

**26.** Dispositif selon l'une quelconque des revendications 2 à 24, caractérisé en ce que dans le dispositif de détection de profil, une roue ferroviaire respective (18) est éclairée au moins approximativement tangentiellement d'un côté d'un plan de mesure (71), au voisinage du profil de roue, par un faisceau lumineux (61) aussi plan parallèle que possible, du dispositif d'éclairement (60), et l'image projetée est évaluée, étant précisé qu'une section de mesure (57) comportant une voie auxiliaire (58) est prévue et qu'un dispositif d'éclairement (60) destiné à produire le faisceau lumineux plan parallèle (61) est disposé d'un côté d'un plan de position de mesure (59), déterminé perpendiculairement à la voie et parallèlement à l'axe du train de roues dans le sens longitudinal de la section de mesure (57), tandis que de l'autre côté est disposé au moins un appareil de prise de vues (62-65) pour détecter l'image projetée, qui pour sa part est relié à un système électronique d'évaluation (figure 18), le dispositif électronique d'évaluation (98) étant relié ou pouvant être relié à un écran (66), à un traceur de courbes ou au dispositif de commande d'une machine-outil.

**27.** Dispositif selon l'une quelconque des revendications 2 ou 26, caractérisé en ce qu'il est prévu quatre appareils de prise de vues (62-65) pour quatre sections d'image projetée qui se jouxtent mutuellement, le système électronique d'évaluation (figure 18) renfermant des dispositifs pour réaliser un prétraitement en parallèle, une mémorisation temporaire et un traitement en série des signaux des appareils de prise de vues (62-65).

**28.** Dispositif selon l'une des revendications 2 ainsi que 26 et 27, caractérisé en ce que chaque dispositif d'éclairement (60) contient un système à lampe flash.

**29.** Dispositif selon l'une quelconque des revendications 2 ainsi que 26 à 28, caractérisé en ce que la source de lumière (67) de chaque dispositif d'éclairement (60) est disposée au-dessous d'un plan de roulement (68), étant précisé qu'un dispositif déflecteur (69) comportant des moyens (70) de déflexion de lumière est disposé dans le dispositif d'éclairement (60) de telle sorte que des roues puissent rouler dessus.

**30.** Dispositif selon l'une quelconque des revendications 2 ainsi que 26 à 29, caractérisé en ce que le dispositif d'éclairement (60) est agencé et disposé de telle sorte que le plan de mesure (71) forme un angle aigu ($\alpha$) avec le plan de position de mesure (59).

**31.** Dispositif selon l'une quelconque des revendications 2 ainsi que 26 à 30, caractérisé en ce que le ou les appareils de prise de vues (62-65) sont montés fixes au-dessous du plan de roulement (68).

**32.** Dispositif selon l'une quelconque des revendications 2 ainsi que 26 à 31, caractérisé en ce qu'il est prévu deux groupes (64, 65 ; 62, 63) d'appareils de prise de vues (62-65), dont l'un (62,63) est orienté dans la direction du faisceau lumineux (61) et dont l'autre (64,65) est orienté obliquement par rapport à cette direction, un miroir semi-transparent (72) (fractionneur de rayonnement) étant prévu dans le faisceau lumineux (61) pour le groupe (64,65) orienté obliquement.

**33.** Dispositif selon l'une quelconque des revendications 2 ainsi que 26 à 32, caractérisé en ce que des appareils de prise de vues à mémoire CCD sont prévus comme appareils de prise de vues (62-65).

**34.** Dispositif selon l'une quelconque des revendications 2 ainsi que 26 à 33, caractérisé en ce qu'il est prévu un dispositif de commutation (73) actionné par une roue (18) et qui active le dispositif au plus tard lorsqu'une roue a atteint la position de mesure.

**35.** Dispositif selon l'une quelconque des revendications 2 ainsi que 26 à 34, caractérisé en ce que chaque dispositif d'éclairement (60) est disposé de telle sorte qu'il éclaire par l'avant la roue (18) qui arrive.

**36.** Dispositif selon l'une quelconque des revendications 2 ainsi que 26 à 35, caractérisé en ce que chaque dispositif d'éclairement (60) est disposé de telle sorte qu'il éclaire par l'arrière la roue qui arrive.

**37.** Dispositif selon l'une quelconque des revendications 2 ainsi que 26 à 28 et 32 à 35, caractérisé en ce qu'il est prévu à l'extérieur du faisceau lumineux plan parallèle (61), entre l'appareil de prise de vues (62-65) et le dispositif d'éclairement (60) de chaque section de mesure (57), un couple de rouleaux de soutien (76), déplaçable verticalement par rapport à ce faisceau lumineux et monté à rotation dans un support de rouleaux de soutien (75), pour réaliser un soutien en rotation de chaque roue (18).

**38.** Dispositif selon la revendication 37, caractérisé en ce que le ou les appareils de prise de vues (62-65) et le dispositif d'éclairement (60) sont disposés sur le support de rouleaux de soutien (75).

**39.** Dispositif selon la revendication 38, caractérisé en ce que le ou les appareils de prise de vues (62-65) et le dispositif d'éclairement (60) sont au moins déplaçables et réglables verticalement par rapport au support de rouleaux de soutien (75).

**40.** Dispositif selon la revendication 39, caractérisé en ce qu'un organe de contrôle ou de détection (77) destiné à déterminer la flèche de la roue (18) est disposé approximativement à mi-distance entre les rouleaux de soutien (76).

**41.** Dispositif selon la revendication 40, caractérisé en ce que l'organe de contrôle ou de détection (77) est relié à un dispositif de réglage (78, 79, 80, 81) pour ajuster la position du ou des appareils de prise de vues (62-65) et du dispositif d'éclairement (60) en fonction de la flèche de la roue (18).

**42.** Dispositif selon l'une quelconque des revendications 37 à 41, caractérisé en ce que chaque support de rouleaux de soutien (75) comportant une paire de rouleaux de soutien (76) est monté déplaçable dans le sens longitudinal (82) des rails, et en ce qu'au moins un support de rouleaux de soutien (75) associé à une roue (18) d'un train de roues comporte un dispositif (77) pour détecter la position de soulèvement de la roue (18) et par conséquent du train de roues.

**43.** Dispositif selon la revendication 1, caractérisé en ce que le dispositif d'éclairement (102) est disposé et conçu de telle sorte qu'il éclaire le profil de la roue (1) sous un angle aigu par rapport à une direction de déplacement (114) (figure 15).

**44.** Dispositif selon la revendication 43, caractérisé en ce qu'il est prévu un dispositif d'éclairement (102) auquel est associé au moins un système optique de formation d'images monté réglable sur un dispositif support (115), le système optique de formation d'images et le dispositif de numérisation pouvant être les éléments respectifs d'un appareil de prise de vues électronique (103-106).

**45.** Dispositif selon la revendication 1, caractérisé en ce que des moyens sont prévus pour diriger le rayon lumineux (116) éclairant le profil, verticalement par rapport au plan de déplacement (107) et depuis le bas en direction du profil.

**46.** Dispositif selon la revendication 45, caractérisé en ce qu'au-dessous du plan de circulation (107), pour chaque roue (1), il est prévu un dispositif d'éclairement (102) pour produire un trait lumineux comportant un rayon lumineux (116) dirigé verticalement vers le profil, étant précisé qu'il est prévu, dans la direction de déplacement relatif (114) entre la roue (1) et le dispositif, des deux côtés du rayon lumineux (116), au moins un appareil de prise de vues (103-106) pour détecter le profil.

**47.** Dispositif selon l'une quelconque des revendications 1 ainsi que 43 à 46, caractérisé en ce que plusieurs appareils de prise de vues (103, 104 ; 105, 106) sont réunis pour former des groupes respectifs d'appareils de prise de vues, dont l'un au moins (103, 104) vise directement le trait lumineux ou la ligne lumineuse et dont au moins un autre groupe (105, 106) vise le trait lumineux ou la ligne lumineuse avec interposition d'un dispositif déflecteur (117).

**48.** Dispositif selon l'une quelconque des revendications 1 ainsi que 43 à 47, caractérisé en ce que tous les appareils de prise de vues (103-106) sont montés fixes au-dessous du plan de déplacement (107).

**49.** Dispositif selon l'une quelconque des revendications 1 ainsi que 43 à 48, caractérisé en ce que les appareils de prise de vues (103-106) et le dispositif d'éclairement (102) de chaque section de mesure (99) sont montés sur un dispositif comportant une paire de rouleaux de soutien (120) déplaçables au moins verticalement (118) et montés à rotation dans un support de rouleaux de soutien (119), pour soutenir chaque roue en rotation.

**50.** Dispositif selon l'une quelconque des revendications 1 ainsi que 43 à 49, caractérisé en ce que chaque support de rouleaux de soutien (119) muni du couple de rouleaux de soutien (120) est disposé de manière à être déplaçable dans le sens longitudinal (121) des rails et à pouvoir être centré par rapport à la roue à mesurer.

**51.** Dispositif selon l'une quelconque des revendications 1 ainsi que 43 à 50, caractérisé en ce qu'il est prévu deux sources d'éclairement (109, 110) qui sont décalées l'une par rapport à l'autre dans le sens de l'axe de train de roues (111) et synchronisées.

**52.** Dispositif selon l'une quelconque des revendications 1 ainsi que 43 à 51, caractérisé en ce qu il est prévu plusieurs appareils de prise de vues (103-106) dont chacun enregistre une section différente du profil, le système électronique d'évaluation (figure 18) relié aux appareils de prise de vues (103-106) renfermant des dispositifs (97) pour mémoriser temporairement et traiter en série les signaux des appareils de prise de vues (103-106).

**53.** Dispositif selon l'une quelconque des revendications 1 ainsi que 43 à 52, caractérisé en ce que l'angle ($\alpha$, $\beta$) entre le dispositif d'éclairement (116) et la direction de rayonnement enregistrée (122, 123) est inférieur à 90° (figure 2) et non inférieur à 60° (figure 14).

**54.** Dispositif selon l'une quelconque des revendications 1 ainsi que 43 à 53, caractérisé en ce que les appareils de prise de vues (103-106) et le dispositif d'éclairement (102) sont montés sur le support (124) de manière à être mobiles et réglables (figure 15) en fonction du diamètre de la roue (1) à mesurer.

**55.** Dispositif selon l'une quelconque des revendications 1 ainsi que 43 à 54, caractérisé en ce que la lumière rayonnée est envoyée aux appareils de prise de vues (103-106) par l'intermédiaire de fibres optiques de transmission d'image.

Figur A

Figur B

Fig. 1

Fig. 2

Fig 3

Fig.4

Figur 5

Figur 6

Figur 7

Figur 8

Figur 9

EP 0 212 052 B1

Figur 10

58  60  73  59  61  64  72  62  63

57  65

Figur 11

EP 0 212 052 B1

EP 0 212 052 B1

Figur 12

Figur 13

Figur 14

EP 0 212 052 B1

Figur 15

Figur 16

Figur 17

EP 0 212 052 B1

Figur 18

Figur 19